(19) Europäisches Patentamt
European Patent Office
Office européen des brevets

(11) EP 2 928 958 B1

(12) # EUROPEAN PATENT SPECIFICATION

(45) Date of publication and mention of the grant of the patent:
**21.08.2019 Bulletin 2019/34**

(21) Application number: **13860667.8**

(22) Date of filing: **21.11.2013**

(51) Int Cl.:
***C08J 5/18*** (2006.01) ***C08L 23/08*** (2006.01)

(86) International application number:
**PCT/US2013/071248**

(87) International publication number:
**WO 2014/088827 (12.06.2014 Gazette 2014/24)**

(54) **HDPE MODIFIED POLYETHYLENE BLOWN FILM COMPOSITIONS HAVING EXCELLENT BUBBLE STABILITY**

HDPE-MODIFIZIERTE POLYETHYLENBLASFOLIENZUSAMMENSETZUNGEN MIT AUSGEZEICHNETER BLASENSTABILITÄT

COMPOSITIONS DE FILM SOUFFLÉ EN POLYÉTHYLÈNE MODIFIÉ PAR POLYÉTHYLÈNE HAUTE DENSITÉ PRÉSENTANT UNE EXCELLENTE STABILITÉ DE BULLE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **05.12.2012 US 201261733578 P**
**25.03.2013 EP 13160930**

(43) Date of publication of application:
**14.10.2015 Bulletin 2015/42**

(73) Proprietor: **ExxonMobil Chemical Patents Inc.**
**Baytown TX 77520-2101 (US)**

(72) Inventors:
- **SHIRODKAR, Pradeep, P.**
**Houston, TX 77044 (US)**
- **CHENG, Jianya**
**Kingwood, TX 77345 (US)**
- **KULKARNI, Rahul R.**
**411021 Pune (IN)**

(74) Representative: **ExxonMobil Chemical Europe Inc.**
**IP Law Europe**
**Hermeslaan 2**
**1831 Machelen (BE)**

(56) References cited:
**WO-A1-2005/014711**
**WO-A1-2011/109920**
**WO-A1-2012/106025**
**GB-A- 2 428 402**
**US-A1- 2008 033 112**
**US-B2- 6 673 870**
**US-B2- 6 891 018**
**US-B2- 7 943 700**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

## Description

## FIELD OF THE INVENTION

The present invention relates to HDPE modifiers, polyethylene compositions comprising an ethylene based polymer and an HDPE modifier, and films thereof.

## BACKGROUND OF THE INVENTION

For many polyolefin applications, including films and fibers, increased melt strength and good optical properties are desirable attributes. A higher melt strength allows fabricators to run their blown film lines at a faster rate. It also allows them to handle thicker films in applications such as geomembranes.

Typical metallocene catalyzed polyethylenes (mPE) are somewhat more difficult to process than low-density polyethylenes (LDPE) made in a high-pressure polymerization process. Generally, mPEs (which tend to have narrow molecular weight distributions and low levels of branching) require more motor power and produce higher extruder pressures to match the extrusion rate of LDPEs. Typical mPEs also have lower melt strength which, for example, adversely affects bubble stability during blown film extrusion, and they are prone to melt fracture at commercial shear rates. On the other hand, mPEs exhibit superior physical properties as compared to LDPEs. In the past, various levels of LDPE have been blended with the mPE to increase melt strength, to increase shear sensitivity, i.e., to increase flow at commercial shear rates in extruders; and to reduce the tendency to melt fracture. However, these blends generally have poor mechanical properties as compared with neat mPE. It has been a challenge to improve mPEs processability without sacrificing physical properties.

U.S. Patent Application Publication No. 2007/0260016 discloses blends of linear low density polyethylene copolymers with other linear low density polyethylenes or very low density, low density, medium density, high density, and differentiated polyethylenes, as well as articles produced therefrom.

U.S. Patent No. 6,300,451 discloses ethylene/butene/1,9-decadiene copolymers and ethylene hexene vinyl norbornene copolymers (see Tables 1 and 2 in U.S. Patent No. 6,300,451). The decadiene terpolymers disclosed are designed to be used alone and not in blends for improved processability/property balance. The relatively high MI of the resins suggests that they would not be suitable in blends which exhibit improved extensional strain hardening.

Patil, et al., "Rheology of Polyethylenes with Novel Branching Topology Synthesized by Chain Walking Catalyst" Macromolecules, 2005, 38, pp. 10571-10579 discloses dendritic PE produced from chain walking catalyst. The dendritic PE prepared by chain walking catalysts has extensive short and long-chain branches with combined branch density of greater than 100 branches per 1000 carbon. The extensive short chain branching leads to amorphous polymers which have limited use in mixtures with semi-crystalline polyethylene resins of commercial interest. Additionally, these polymers are prepared at low temperatures and extremely low pressures, both conditions that are not commercially attractive. Additionally, blends are not disclosed in this paper and there is no mention of blown film compositions.

Ye, et al., in "Chain-Topology-Controlled Hyperbranched Polyethylene as Effective Polymer Processing Aid (PPA) For Extrusion of a Metallocene Linear-Low-Density Polyethylene (mLLDPE)" J. Rheol. 2008, 52, pp. 243-260 discloses that the processability of Exceed™ 1018 Polyethylene, in terms of melt fracture, could be improved with an addition of the hyperbranched PEs made from chain walking polymerization at more than 3 wt%. Because the hyperbranched PE is immiscible with mLLDPE, it was speculated that the hyperbranched PE forms phase-separated droplets, which can migrate to the die surface and form a lubricating layer promoting extrudate slippage.

U.S. Patent No. 6,870,010 discloses blown films with improved optical properties produced from blends of linear metallocene PE with high MW HDPE. While the optical properties, as measured by haze, are improved over unblended film composition, the mechanical properties, as measured by Dart Impact, suffer a significant deterioration.

U.S. Patent No. 4,438,238 describes blends for extrusion processing, injection molding and films, where a combination of two ethylene-$\alpha$-olefin copolymers with different densities, intrinsic viscosities and number of short chain branching per 1,000 carbon atoms is attributed with such physical properties.

U.S. Patent No. 4,461,873 describes ethylene polymer blends of a high molecular weight ethylene polymer, preferably a copolymer, and a low molecular weight ethylene polymer, preferably an ethylene homopolymer, for improved film properties and environmental stress crack resistance (ESCR), useful in the manufacture of film, in blow molding techniques, or in the production of pipes and wire coating.

EP 0 423 962 describes ethylene polymer compositions particularly suitable for gas pipes, said to have improved ESCR, comprising two or more kinds of ethylene polymers different in average molecular weight, at least one of which is a high molecular weight ethylene polymer having an intrinsic viscosity of 4.5 to 10.0 dl/g in decalin at 135°C and a density of 0.910 to 0.930 g/cm$^3$, and another of which is a low molecular weight ethylene polymer having an intrinsic viscosity of 0.5 to 2.0 dl/g, as determined for the first polymer, and a density of 0.938 to 0.970 g/cm$^3$.

U.S. Patent No. 5,082,902 describes blends of linear polyethylenes for injection and rotational molding said to have reduced crystallization times with improved impact strength and ESCR. The blends comprise: (a) a first polymer having a density of from 0.85 to 0.95 g/cm$^3$ and a melt index (MI) of 1 to 200 g/10 min; and (b) a second polymer having a density of 0.015 to 0.15 g/cm$^3$ greater than the density of the first polymer and an MI differing by no more than 50% from the MI of the first polymer.

U.S. Patent No. 5,306,775 describes polyethylene blends said to have a balance of properties for processing by any of the known thermoplastic processes, specifically including improved ESCR. These compositions have: (a) low molecular weight ethylene resins made using a chromium oxide-based catalyst and having a density at least 0.955 g/cm$^3$ and MI between 25 and 400 g/10 min; and (b) high molecular weight ethylene copolymer resins with a density not higher than 0.955 g/cm$^3$ and a high load melt index (HLMI) between 0.1 and 50 g/10 min.

U.S. Patent No. 5,382,631 describes linear interpolymer polyethylene blends having molecular weight distribution ($M_w/M_n$) $\leqq$ 3 and composition distribution (CDBI) $\leqq$ 50%, where the blends are generally free of fractions having higher molecular weight and lower average comonomer contents than other blend components. Improved properties for films, fibers, coatings, and molded articles are attributed to these blends. In one example, a first component is an ethylene-butene copolymer with a density of 0.9042 g/cm$^3$, $M_w/M_n$ of 2.3, and an MI of 4.0 dg/min; and a second component is a high density polyethylene with a density of 0.9552 g/cm$^3$, $M_w/M_n$ of 2.8, and an MI of 5.0 dg/min. The blend is ascribed with improved tear strength characteristics.

U.S. Patent No. 7,396,878 is directed at compositions that are suitable for injection molding applications having an HDPE component in the blends that has a melt index greater than 10.

U.S. Patent No. 7,943,700 discusses blends where the majority (80 wt% to 95 wt%) component is a HDPE (> 0.945 density) and the minority (5 wt% to 20 wt%) component is a lower (< 0.945) density component. The minority component has a narrow MWD (Mw/Mn < 5).

U.S. Patent No. 8,168,724 describes a modifier that is based on the dendritic polymers resulting from anionic condensation polymerization of polybutadiene.

U.S. Patent No. 7,439,306 is concerned with blending of PE components which have different densities. Both components are to be produced by Ziegler Natta or Metallocene catalysts. Neither of these catalysts makes HDPE that are as broad in MWD as those made by a Phillips Chromium catalyst.

U.S. Patent No. 7,951,873 describes blends of various polyethylene components. However, none of the blends produce single layer films with improved opticals.

WO 2012/106025 discloses multilayer films having an outer layer of LLDPE and a denser core of mLLDPE blended with a HDPE.

None of the prior art described above mention the use of HDPE modifier to improve opticals and processability of mLLDPE films. Metallocene LLDPE films provide excellent mechanical properties such as impact and tear but have poor bubble stability during film blowing. Previous attempts to remedy the situation by addition of long-chain-branched PEs such as LDPE or other branched PEs (U.S. Patent No. 6,870,010) have resulted in decreased mechanical properties. Some of the blown films blended with branched PE additives additionally suffered from poor optical properties, e.g., the existence of gel particles. There is an industry wide need to find modifiers that improve processability without loss in mechanical properties, and more preferably with enhancement in one or more mechanical properties.

The current invention solves the problem by using a certain broad Mw/Mn high density polyethylene that is effective in improving processability at very low concentration levels (such as 5%).

Other references of interest include: Guzman, et al., AIChE Journal May 2010, Vol. 56, No 5, pp. 1325-1333; U.S. Patent Nos. 5,670,595; 6,509,431; 6,870,010; 7,687,580; 6,355,757; 6,391,998; 6,417,281; 6,114,457; 6,734,265; 6,147,180; and U.S. Patent Application Publication No. 2011/0118420.

## SUMMARY OF THE INVENTION

This invention relates to polyethylene blends comprising one or more ethylene polymers and one or more HDPE modifiers. The HDPE modifiers are present at from 0.25 wt% to 10 wt% based on the weight of the blend.

The HDPE modifier has: 1) a density of greater than 0.94 g/cc; 2) a Mw/Mn greater than 5; 3) a melt index (ASTM 1238, 190°C, 2.16 kg) of less than 0.7 dg/min; and 4) a $g'_{vis}$ of less than 0.96. The one or more ethylene polymers have a $g'_{vis}$ of 0.95 or more, a composition breadth index (CDBI) of 60% more and a density of 0.90 g/cc or more; and the ethylene polymer has a $g'_{vis}$ of at least 0.01 units higher than the $g'_{vis}$ of the HDPE modifier.

## BRIEF DESCRIPTION OF DRAWINGS

Figure 1 is GPC of the base LLDPE.
Figure 2 is GPC of the HDPE modifier.

Figure 3 is Complex Viscosity of LLDPE at 190°C.
Figure 4 is Complex Viscosity of HDPE modifier at 190°C.

## DEFINITIONS

An "olefin," alternatively referred to as "alkene," is a linear, branched, or cyclic compound of carbon and hydrogen having at least one double bond. For purposes of this specification and the claims appended thereto, when a polymer or copolymer is referred to as comprising an olefin including, but not limited to ethylene, hexene, and diene, the olefin present in such polymer or copolymer is the polymerized form of the olefin. For example, when a copolymer is said to have an "ethylene" content of 35 wt% to 55 wt%, it is understood that a mer unit in the copolymer is derived from ethylene in the polymerization reaction and said derived units are present at 35 wt% to 55 wt%, based upon the weight of the copolymer. A "polymer" has two or more of the same or different mer units. A "homopolymer" is a polymer having mer units that are the same. A "copolymer" is a polymer having two or more mer units that are different from each other. A "terpolymer" is a polymer having three mer units that are different from each other. The term "different," as used to refer to mer units, indicates that the mer units differ from each other by at least one atom or are different isomerically. Accordingly, the definition of copolymer, as used herein, includes terpolymers and the like. Likewise, the definition of polymer, as used herein, includes copolymers and the like. Thus, as used herein, the terms "polyethylene," "ethylene polymer," "ethylene copolymer," and "ethylene based polymer" mean a polymer or copolymer comprising at least 50 mol% ethylene units (preferably at least 70 mol% ethylene units, more preferably at least 80 mol% ethylene units, even more preferably at least 90 mol% ethylene units, even more preferably at least 95 mol% ethylene units, or 100 mol% ethylene units (in the case of a homopolymer)). Furthermore, the term "polyethylene composition" means a blend containing one or more polyethylene components.

As used herein, the terms "polypropylene," "propylene polymer," "propylene copolymer," and "propylene based polymer" mean a polymer or copolymer comprising at least 50 mol% propylene units (preferably at least 70 mol% propylene units, more preferably at least 80 mol% propylene units, even more preferably at least 90 mol% propylene units, even more preferably at least 95 mol% propylene units, or 100 mol% propylene units (in the case of a homopolymer)).

As used herein, the terms "polybutene," "butene polymer," "butene copolymer," and "butene based polymer" mean a polymer or copolymer comprising at least 50 mol% butene units (preferably at least 70 mol% butene units, more preferably at least 80 mol% butene units, even more preferably at least 90 mol% butene units, even more preferably at least 95 mol% butene units, or 100 mol% butene units (in the case of a homopolymer)).

For purposes of this invention and the claims thereto, an "EP Rubber" is defined to be a copolymer of ethylene and propylene, and optionally diene monomer(s), chemically crosslinked (i.e., cured) or not, where the ethylene content is from 35 wt% to 80 wt%, the diene content is 0 wt% to 15 wt%, and the balance is propylene; and where the copolymer has a Mooney viscosity, ML(1+4) @ 125°C (measured according to ASTM D1646) of 15 to 100. For purposes of this invention and the claims thereto, an "EPDM" or "EPDM Rubber" is defined to be an EP Rubber having diene present.

For purposes of this invention and the claims thereto, an ethylene polymer having a density of 0.86 g/cm$^3$ or less is referred to as an ethylene elastomer or elastomer; an ethylene polymer having a density of more than 0.86 to less than 0.910 g/cm$^3$ is referred to as an ethylene plastomer or plastomer; an ethylene polymer having a density of 0.910 to 0.940 g/cm$^3$ is referred to as a low density polyethylene; and an ethylene polymer having a density of more than 0.940 g/cm$^3$ is referred to as a high density polyethylene (HDPE). For these definitions, density is determined using the method described under Test Methods below.

Polyethylene in an overlapping density range, i.e., 0.890 to 0.930 g/cm$^3$, typically from 0.915 to 0.930 g/cm$^3$, which is linear and does not contain long-chain branching, is referred to as "linear low density polyethylene" (LLDPE) and can be produced with conventional Ziegler-Natta catalysts, vanadium catalysts, or with metallocene catalysts in gas phase reactors and/or in slurry reactors and/or with any of the disclosed catalysts in solution reactors. "mLLDPE" is an LLDPE made by a metallocene catalyst.

"Linear" means that the polyethylene has no long-chain branches; typically referred to as a $g'_{vis}$ of 0.95 or above, preferably 0.97 or above, preferably 0.98 or above.

Composition Distribution Breadth Index (CDBI) is a measure of the composition distribution of monomer within the polymer chains and is measured by the procedure described in PCT publication WO 93/03093, published Feb. 18, 1993, specifically columns 7 and 8, as well in Wild et al, J. Poly. Sci., Poly. Phys. Ed., Vol. 20, p. 441 (1982) and U.S. Patent No. 5,008,204, including that fractions having a weight average molecular weight (Mw) below 15,000 are ignored when determining CDBI.

Mw is weight average molecular weight, Mn is number average molecular weight and Mz is z average molecular weight. MD is machine direction. TD is transverse direction.

## DETAILED DESCRIPTION OF THE INVENTION

We have discovered that certain HDPE modifiers will advantageously improve processability of polyethylene without significantly impacting its mechanical properties. Moreover, addition of these hydrocarbon modifiers provides a means to change such properties on a continuous scale, based on real-time needs, which is typically not possible due to the availability of only discrete polyethylene grades. Furthermore, a different set of relationships between processability and properties is obtained, compared to those available from traditional polyethylenes and their blends with conventional LDPE, which allows for new and advantageous properties of the fabricated articles.

More particularly, the present invention relates to polyethylene compositions having improved properties such as melt strength or extensional strain hardening, without substantial loss in blown film, dart impact, MD tear, or other mechanical properties. Additionally, the films produced from these compositions exhibit surprisingly excellent optical properties as measured by lower film haze.

This invention relates to polyethylene blend compositions comprising one or more ethylene polymers (preferably linear ethylene polymers) and one or more HDPE modifiers (also referred to as the "modifier" or the "branched modifier").

The polyethylene blends comprise one or more ethylene polymers (having a $g'_{vis}$ of 0.95 or more) and one or more HDPE modifiers, wherein the modifier has: 1) a density greater than 0.94 g/cc (preferably from 0.945 to 0.965 g/cc, preferably from 0.950 to 0.965 g/cc); 2) a Mw/Mn greater than 5 (preferably greater than 6, preferably greater than 10); 3) a melt index (ASTM 1238, 190°C, 2.16 kg) of less than 0.7 dg/min (preferably less than 0.6 dg/min, preferably less than 0.5 dg/min); and 4) a branching index, $g'_{vis}$, of less than 0.96, (preferably less than 0.95, preferably less than 0.90, preferably less than 0.85, preferably less than 0.80, preferably less than 0.75).

In one embodiment of the invention, this invention relates to a composition comprising:

1) from 99.99 wt% to 50 wt% (preferably from 75 wt% to 99.9 wt%, preferably from 90 wt% to 99.9 wt%, preferably from 95 wt% to 99.5 wt%, preferably from 96 wt% to 99.5 wt%, preferably from 97 wt% to 99.5 wt%, preferably from 98 wt% to 99 wt%), based upon the weight of the blend, of an ethylene polymer having:

   a) a branching index, $g'_{vis}$, (determined according to the procedure described in the Test Method section below) of 0.95 or more, preferably 0.97 or more, preferably 0.98 or more, preferably 0.99 or more;
   b) a density of 0.900 to 0.980 g/cc (preferably from 0.900 to 0.935 g/cc, preferably from 0.910 to 0.930 g/cc); and
   c) an Mw of 20,000 g/mol or more (preferably 20,000 to 2,000,000 g/mol, preferably 30,000 to 1,000,000 g/mol, more preferably 40,000 to 200,000 g/mol, preferably 50,000 to 750,000 g/mol); and

2) from 0.25 wt% to 10 wt% (preferably from 0.25 wt% to 9 wt%, preferably from 0.5 wt% to 8 wt%, preferably from 0.5 wt% to 7 wt%, preferably from 1 wt% to 6 wt%), based upon the weight of the blend, of HDPE modifier(s), wherein the modifier has: 1) a density greater than 0.94 g/cc (preferably from 0.945 to 0.965 g/cc, preferably from 0.950 to 0.965 g/cc); 2) a Mw/Mn greater than 5 (preferably greater than 6, preferably greater than 10); 3) a melt index (ASTM 1238, 190°C, 2.16 kg) of less than 0.7 dg/min (preferably less than 0.6 dg/min, preferably less than 0.5 dg/min); and 4) a branching index, $g'_{vis}$, of less than 0.96, (preferably less than 0.95, preferably less than 0.90, preferably less than 0.85, preferably less than 0.80, preferably less than 0.75).

In another embodiment of the invention, the modifiers described herein contain less than 0.6 ppm silicon, preferably less than 0.3 ppm silicon, preferably less than 0.1 ppm silicon, preferably 0 ppm silicon (as determined by ICPES (Inductively Coupled Plasma Emission Spectrometry), which is described in J. W. Olesik, "Inductively Coupled Plasma-Optical Emission Spectroscopy," in the Encyclopedia of Materials Characterization, C. R. Brundle, C. A. Evans, Jr., and S. Wilson, Eds., Butterworth-Heinemann, Boston, Mass., 1992, pp. 633-644, is used to determine the amount of an element in a material).

In another embodiment, the polyethylene/modifier compositions of this invention comprise less than 5 wt% (preferably less than 1 wt%, preferably 0 wt%) propylene homopolymer or copolymer, based upon the weight of the composition.

In another embodiment, the polyethylene/modifier compositions of this invention comprise less than 5 wt% (preferably less than 1 wt%, preferably 0 wt%) EP Rubber, based upon the weight of the composition.

The blend comprises:

a) the HDPE modifier described herein present at from 0.25 wt% to 10 wt% (preferably from 0.5 wt% to 8 wt%, preferably from 0.5 wt% to 7 wt%, preferably from 0.5 wt% to 6 wt%, preferably from 0.5 wt% to 5 wt%, based upon the weight of the blend); and
b) one or more ethylene polymers having a $g'_{vis}$ of 0.95 or more, a CDBI of 60% or more and a density of 0.90 g/cc or more, wherein the ethylene polymer has a $g'_{vis}$ of at least 0.01 units higher than the $g'_{vis}$ of the HDPE modifier (preferably at least 0.02, preferably at least 0.03, preferably 0.04, preferably at least 0.05, preferably at least 0.1, preferably at least 0.2, preferably at least 0.25, preferably at least 0.3, preferably at least 0.4, preferably at least 0.45 units higher).

Modified Blends

In a preferred embodiment, the blends comprising the polyethylene (preferably linear polyethylene) described herein and the HDPE modifier described herein are gel free, as determined by xylene insolubility (boiling xylene). Specifically, the blend preferably 5 wt% or less (preferably 4 wt% or less, preferably 3 wt% or less, preferably 2 wt% or less, preferably 1 wt% or less, preferably 0 wt%) of xylene insoluble material.

In a preferred embodiment, the blends comprising the polyethylene (preferably linear polyethylene) described herein and the HDPE modifier described herein have good processability as determined by improved bubble stability which is measured in term of gauge variation (Gauge COV) as described in the Test Methods below. Preferably, the blend has a Gauge COV of less than 12%, preferably less than 11%, preferably less than 10%, preferably less than 9%, preferably less than 8%, preferably less than 7%, preferably less than 6%, preferably less than 5%, preferably less than 4%, preferably less than 3%.

In a preferred embodiment, the polyethylene compositions comprising one or more ethylene polymers and one or more branched modifiers show characteristics of strain hardening in extensional flow. Strain hardening is observed as a sudden, abrupt upswing of the extensional viscosity in the transient extensional viscosity vs. time plot. This abrupt upswing, away from the behavior of a linear viscoelastic material, was reported in the 1960s for LDPE (reference: J. Meissner, Rheology Acta., Vol. 8, 78, 1969) and was attributed to the presence of long branches in the polymer. In one embodiment, the inventive polyethylene compositions have strain-hardening in extensional viscosity. The strain-hardening ratio is preferably 1.2 or more, preferably 1.5 or more, more preferably 2.0 or more, and even more preferably 2.5 or more, when the extensional viscosity is measured at a strain rate of 1 $sec^{-1}$ and at a temperature of 150°C.

In one embodiment, the melt strength of the blend is at least 5% higher than the melt strength of ethylene polymer component(s) used in the blend.

Rheology of the inventive composition can be different from the rheology of the ethylene polymer component, depending on the properties of the branched modifier polymer. In one embodiment, the difference in complex shear viscosity between the inventive composition and ethylene polymer component(s) is less than 10%, preferably less than 5% at all frequencies.

In another embodiment, the complex shear viscosity of the inventive polyethylene composition is at least 10% higher than the complex viscosity of the ethylene polymer component(s) employed in the blend composition when the complex viscosity is measured at a frequency of 0.1 rad/sec and a temperature of 190°C, and the complex viscosity of the inventive polyethylene composition is the same or less than the complex viscosity of the ethylene polymer component used in the blend composition when the complex viscosity is measured at a frequency of 398 rad/sec and a temperature of 190°C. The complex shear viscosity is measured according to the procedure described in the Test Method section below. Alternatively, the shear thinning ratio of the inventive composition is at least 10% higher than the shear thinning ratio of the ethylene polymer component.

Preferably, the blend of the polyethylene and the modifier has a melt index, as measured by ASTM D-1238, at 190°C and 2.16 kg in the range of from 0.01 dg/min to 100 dg/min in one embodiment, from 0.01 dg/min to 50 dg/min in a more particular embodiment, from 0.02 dg/min to 20 dg/min in yet a more particular embodiment, from 0.03 dg/min to 2 dg/min in yet a more particular embodiment, and from 0.002 dg/min to 1 dg/min in yet a more particular embodiment.

Preferably, the HLMI, also referred to as the 121, (ASTM D 1238 190°C, 21.6 kg) of the blend of the polyethylene and the modifier ranges from 0.01 to 800 dg/min in one embodiment, from 0.1 to 500 dg/min in another embodiment, from 0.5 to 300 dg/min in yet a more particular embodiment, and from 1 to 100 dg/min in yet a more particular embodiment wherein a desirable range is any combination of any upper 121 limit with any lower 121 limit.

Preferably, the blend of the polyethylene and the modifier has a melt index ratio (MIR, or I21/I2, ASTM D 1238, 190°C, 21.6 kg/2.16 kg) of from 10 to 500 in one embodiment, from 15 to 300 in a more particular embodiment, and from 20 to 200 in yet a more particular embodiment. Alternately, the modifiers may have a melt index ratio of from greater than 15 in one embodiment, greater than 20 in a more particular embodiment, greater than 30 in yet a more particular embodiment, greater than 40 in yet a more particular embodiment, and greater than 50 in yet a more particular embodiment.

In a preferred embodiment, films, preferably blown films, produced from the blend of polyethylene and modifier have an Elmendorf Tear (reported in grams (g) or grams per mil (g/mil) as determined by ASTM D-1922) of at least 100 g/mil, preferably at least 150 g/mil, preferably at least 200 g/mil, wherein a desirable blend may exhibit any combination of any upper limit with any lower limit.

In a preferred embodiment, films, preferably blown films, produced from the blend of polyethylene and modifier has a haze, (measured according to ASTM D1003) of 25 or less, preferably 20 or less, preferably 15 or less, preferably 10 or less.

In a preferred embodiment, films, preferably blown films, produced from the blends of polyethylene and modifier described herein has an Dart Drop (determined as described in the Test Methods below and reported as grams per mil) of at least 100 g/mil, preferably at least 150 g/mil, preferably at least 200 g/mil.

In a preferred embodiment, films, preferably blown films, produced from the blends of polyethylene and modifier described herein are at least 0.3 mils thick, preferably at least 0.5 mils thick, preferably at least 1.0 mils thick, and preferably the films are less than 5 mils thick, preferably less than 3 mils thick, preferably less than 2 mils thick, wherein a desirable blend may exhibit any combination of any upper limit with any lower limit.

## HDPE Modifiers

The polyethylene compositions of the present invention include a HDPE modifier (also referred to as a "modifier" herein). It will be realized that the classes of materials described herein that are useful as modifiers can be utilized alone or admixed with other modifiers described herein in order to obtain desired properties.

HDPE hydrocarbon polymers useful as modifiers herein are typically produced by process and catalysts known in the art, such as the process and catalyst described in U.S. Patent No. 7,943,700.

In a preferred embodiment of the invention, the HDPE modifier has a density from 0.945 g/cm$^3$ to 0.970 g/cm$^3$, preferably from 0.945 g/cm$^3$ to 0.965 g/cm$^3$, for example, from 0.948 g/cm$^3$ to 0.965 g/cm$^3$, from 0.950 g/cm$^3$ to 0.965 g/cm$^3$, from 0.952 g/cm$^3$ to 0.965 g/cm$^3$, from 0.954 g/cm$^3$ to 0.965 g/cm$^3$, or from 0.956 g/cm$^3$ to 0.965 g/cm$^3$.

In a preferred embodiment of the invention, the HDPE has an Mw/Mn of from 5 up to 40, preferably ranging from 5.5 to 40, from 7 to 30 in another embodiment.

In a preferred embodiment of the invention, the HDPE modifier has a 1% secant flexural modulus of 200 to 1000 MPa, from 300 to 800 MPa in another embodiment, and from 400 to 750 MPa in yet another embodiment, wherein a desirable HDPE modifier may exhibit any combination of any upper flexural modulus limit with any lower flexural modulus limit.

The HDPE modifier has a melt index (MI) of less than 0.7 dg/min, preferably from 0.05 to 6.5 dg/min, preferably from 0.1 to 0.6 dg/min, as measured according to ASTM D1238 (190°C, 2.16 kg). Preferably, the MI of the HDPE modifier is at least 0.1 dg/min and less than 0.7 dg/min.

In a preferred embodiment if the invention, the modifier has:

1) a $g'_{vis}$ value less than 0.75 (preferably less than 0.70, preferably less than 0.65, preferably less than 0.60, preferably less than 0.55, preferably less than 0.50, preferably less than 0.45, preferably less than 0.40, preferably less than 0.35, preferably less than 0.30); and

2) has 5 wt% or less (preferably 4 wt% or less, preferably 3 wt% or less, preferably 2 wt% or less, preferably 1 wt% or less, preferably 0 wt%) of xylene insoluble material.

Preferably the HDPE modifier is gel-free. Presence of gel can be detected by dissolving the material in xylene at xylene's boiling temperature. Gel-free product should be dissolved in xylene. In one embodiment, the branched modifier has 5 wt% or less (preferably 4 wt% or less, preferably 3 wt% or less, preferably 2 wt% or less, preferably 1 wt% or less, preferably 0 wt%) of xylene insoluble material.

Mw/Mn is measured by size exclusion chromatography, as described in the Test Methods section below.

Density is determined according to ASTM D 1505 using a density-gradient column on a compression-molded specimen that has been slowly cooled to room temperature (i.e., over a period of 10 minutes or more) and allowed to age for a sufficient time that the density is constant within +/- 0.001 g/cm$^3$.

Branching index, $g'_{vis}$ is determined using data generated using the SEC-DRI-LS-VIS procedure described in the Test Methods section, paragraphs [0334] to [0341], pages 24-25 of U.S. Patent Application Publication No. 2006/0173123 (including the references cited therein, except that the GPC procedure is run as described in the Test Methods section below; in the event of conflict between the methods, the method described herein shall be used).

## Ethylene Polymers

The modifiers described herein are blended with at least one ethylene polymer to prepare the compositions of this invention.

In one aspect of the invention, the ethylene polymer is selected from ethylene homopolymer, ethylene copolymers, and blends thereof. Useful copolymers comprise one or more comonomers in addition to ethylene and can be a random copolymer, a statistical copolymer, a block copolymer, and/or blends thereof. In particular, the ethylene polymer blends described herein may be physical blends or *in situ* blends of more than one type of ethylene polymer or blends of ethylene polymers with polymers other than ethylene polymers where the ethylene polymer component is the majority component (e.g., greater than 50 wt%). The method of making the polyethylene is not critical, as it can be made by slurry, solution, gas phase, high pressure, or other suitable processes, and by using catalyst systems appropriate for the polymerization of polyethylenes, such as Ziegler-Natta-type catalysts, chromium catalysts, metallocene-type catalysts, other appropriate catalyst systems, or combinations thereof, or by free-radical polymerization. In a preferred embodiment, the ethylene polymers are made by the catalysts, activators, and processes described in U.S. Patent Nos. 6,342,566; 6,384,142; 5,741,563; PCT publications WO 03/040201; and WO 97/19991. Such catalysts are well known in the art, and are described in, for example, ZIEGLER CATALYSTS (Gerhard Fink, Rolf Mülhaupt and Hans H. Brintzinger, eds., Springer-Verlag 1995); Resconi et al.; and I, II METALLOCENE-BASED POLYOLEFINS (Wiley & Sons 2000).

Preferred ethylene polymers and copolymers that are useful in this invention include those sold by ExxonMobil Chemical Company in Houston Texas, including those sold as ExxonMobil HDPE, ExxonMobil LLDPE, and ExxonMobil LDPE; and those sold under the ENABLE™, EXACT™, EXCEED™, ESCORENE™, EXXCO™, ESCOR™, PAXON™, and OPTEMA™ tradenames.

The polyethylene copolymers have a composition distribution breadth index (CDBI) of 60% or more, preferably 60% to 80%, preferably 65% to 80%. In another preferred embodiment, the ethylene copolymer has a density of 0.910 to 0.950 g/cm$^3$ (preferably 0.915 to 0.940 g/cm$^3$, preferably 0.918 to 0.925 g/cm$^3$) and a CDBI of 60% to 80%, preferably between 65% and 80%. Preferably, these polymers are metallocene polyethylenes (mPEs).

In another embodiment, the ethylene copolymer comprises one or more mPEs described in U.S. Patent Application Publication No. 2007/0260016 and U.S. Patent No. 6,476,171, e.g., copolymers of an ethylene and at least one alpha olefin having at least 5 carbon atoms obtainable by a continuous gas phase polymerization using supported catalyst of an activated molecularly discrete catalyst in the substantial absence of an aluminum alkyl based scavenger (e.g., triethylaluminum, trimethylaluminum, tri-isobutyl aluminum, tri-n-hexylaluminum, and the like), which polymer has a Melt Index of from 0.1 to 15 (ASTM D 1238, condition E); a CDBI of at least 70%, a density of from 0.910 to 0.930 g/cc; a Haze (ASTM D1003) value of less than 20; a Melt Index ratio (121/12, ASTMD 1238) of from 35 to 80; an averaged Modulus (M) (as defined in U.S. Patent No. 6,255,426) of from 20,000 to 60,000 psi (13790 to 41369 N/cm$^2$); and a relation between M and the Dart Impact Strength (26 inch, ASTM D 1709) in g/mil (DIS) complying with the formula:

$$DIS \geq 0.8 \text{ x } [100+e^{(11.71-0.000268xM+2.183x10^{-9}xM^2)}],$$

where "e" represents 2.1783, the base Napierian logarithm, M is the averaged Modulus in psi and DIS is the 26 inch (66cm) dart impact strength. (See U.S. Patent No. 6,255,426 for further description of such ethylene polymers).

Deleted

In another embodiment, the ethylene polymer comprises olefin block copolymers as described in EP 1 716 190.

In another embodiment, the ethylene polymer is produced using chrome based catalysts, such as, for example, in U.S. Patent No. 7,491,776, including that fluorocarbon does not have to be used in the production. Commercial examples of polymers produced by chromium include the Paxon™ grades of polyethylene produced by ExxonMobil Chemical Company, Houston Texas.

Deleted

In another embodiment, the ethylene polymer comprises substantially linear and linear ethylene polymers (SLEPs). Substantially linear ethylene polymers and linear ethylene polymers and their method of preparation are fully described in U.S. Patent Nos. 5,272,236; 5,278,272; 3,645,992; 4,937,299; 4,701,432; 4,937,301; 4,935,397; 5,055,438; EP 129,368; EP 260,999; and WO 90/07526. As used herein, "a linear or substantially linear ethylene polymer" means a homopolymer of ethylene or a copolymer of ethylene and one or more alpha-olefin comonomers having a linear backbone (i.e., no cross linking), a specific and limited amount of long-chain branching or no long-chain branching, a narrow molecular weight distribution, a narrow composition distribution (e.g., for alpha-olefin copolymers) or a combination thereof. More explanation of such polymers is discussed in U.S. Patent No. 6,403,692.

Preferred ethylene homopolymers and copolymers useful in this invention typically have:

1. an $M_w$ of 20,000 g/mol or more, preferably 20,000 to 2,000,000 g/mol, preferably 30,000 to 1,000,000, preferably 40,000 to 200,000, preferably 50,000 to 750,000, as measured by size exclusion chromatography according to the procedure described below in the Test Methods section; and/or
2. an $M_w/M_n$ of 1 to 40, preferably 1.6 to 20, more preferably 1.8 to 10, more preferably 1.8 to 4, preferably 8 to 25, as measured by size exclusion chromatography as described below in the Test Methods section; and/or
3. a $T_m$ of 30°C to 150°C, preferably 30°C to 140°C, preferably 50°C to 140°C, more preferably 60°C to 135°C, as determined by the DSC method described below in the Test Methods section; and/or
4. a crystallinity of 5% to 80%, preferably 10% to 70%, more preferably 20% to 60% (alternatively, the polyethylene may have a crystallinity of at least 30%, preferably at least 40%, alternatively at least 50%, where crystallinity is determined by the DSC method described below in the Test Methods section); and/or

5. a heat of fusion of 300 J/g or less, preferably 1 to 260 J/g, preferably 5 to 240 J/g, preferably 10 to 200 J/g, as measured by the DSC method described below in the Test Methods section; and/or

6. a crystallization temperature (Tc) of 15°C to 130°C, preferably 20°C to 120°C, more preferably 25°C to 110°C, preferably 60°C to 125°C, as measured by the method described below in the Test Methods section; and/or

7. a heat deflection temperature of 30°C to 120°C, preferably 40°C to 100°C, more preferably 50°C to 80°C, as measured according to ASTM D648 on injection molded flexure bars, at 66 psi load (455kPa); and/or

8. a Shore hardness (D scale) of 10 or more, preferably 20 or more, preferably 30 or more, preferably 40 or more, preferably 100 or less, preferably from 25 to 75 (as measured by ASTM D 2240); and/or

9. a percent amorphous content of at least 50%, alternatively at least 60%, alternatively at least 70%, even alternatively between 50% and 95%, or 70% or less, preferably 60% or less, preferably 50% or less, as determined by subtracting the percent crystallinity from 100 as described in the Test Methods section below; and/or

10. a branching index ($g'_{vis}$) of 0.97 or more, preferably 0.98 or more, preferably 0.99 or more, preferably 1, as measured using the method described below in the Test Methods section; and/or

11. a density of 0.900 to 0.980 g/cc (preferably from 0.900 to 0.935 g/cc, preferably from 0.910 to 0.930 g/cc) (alternatively between 0.910 and 0.940 g/$cm^3$, or alternatively between 0.94 to 0.965 g/ $cm^3$) (determined according to ASTM D 1505 using a density-gradient column on a compression-molded specimen that has been slowly cooled to room temperature (i.e., over a period of 10 minutes or more) and allowed to age for a sufficient time that the density is constant within +/- 0.001 g/$cm^3$).

The polyethylene may be an ethylene homopolymer, such as HDPE. In another embodiment, the ethylene homopolymer has a molecular weight distribution ($M_w/M_n$) of up to 40, preferably ranging from 1.5 to 20, from 1.8 to 10 in another embodiment, from 1.9 to 5 in yet another embodiment, and from 2.0 to 4 in yet another embodiment. In another embodiment, the 1% secant flexural modulus (determined according to ASTM D-882-10) of the ethylene polymer falls in a range of 200 to 1000 MPa, from 300 to 800 MPa in another embodiment, and from 400 to 750 MPa in yet another embodiment, wherein a desirable polymer may exhibit any combination of any upper flexural modulus limit with any lower flexural modulus limit. The melt index (MI) of preferred ethylene homopolymers range from 0.05 to 800 dg/min in one embodiment and from 0.1 to 100 dg/min in another embodiment, as measured according to ASTM D1238 (190°C, 2.16 kg).

In a preferred embodiment, the polyethylene comprises less than 20 mol% propylene units (preferably less than 15 mol%, preferably less than 10 mol%, preferably less than 5 mol%, preferably 0 mol% propylene units).

In another embodiment of the invention, the ethylene polymer is an ethylene copolymer, either random or block, of ethylene and one or more comonomers selected from $C_3$ to $C_{20}$ $\alpha$-olefins, typically from $C_3$ to $C_{10}$ $\alpha$-olefins in another embodiment. Preferably, the comonomers are present from 0.1 wt% to 50 wt% of the copolymer in one embodiment, from 0.5 wt% to 30 wt% in another embodiment, from 1 wt% to 15 wt% in yet another embodiment, and from 0.1 wt% to 5 wt% in yet another embodiment, wherein a desirable copolymer comprises ethylene and $C_3$ to $C_{20}$ $\alpha$-olefin derived units in any combination of any upper wt% limit with any lower wt% limit described herein. Preferably, the ethylene copolymer will have a weight average molecular weight of from greater than 8,000 g/mol in one embodiment, greater than 10,000 g/mol in another embodiment, greater than 12,000 g/mol in yet another embodiment, greater than 20,000 g/mol in yet another embodiment, and less than 1,000,000 g/mol in yet another embodiment, less than 800,000 g/mol in yet another embodiment, wherein a desirable copolymer may comprise any upper molecular weight limit with any lower molecular weight limit described herein.

In another embodiment, the ethylene copolymer comprises ethylene and one or more other monomers selected from the group consisting of $C_3$ to $C_{20}$ linear, branched or cyclic monomers, and in some embodiments is a $C_3$ to $C_{12}$ linear or branched alpha-olefin, preferably butene, pentene, hexene, heptene, octene, nonene, decene, dodecene, 4-methylpentene-1, 3-methyl pentene-1, 3,5,5-trimethyl-hexene-1, and the like. The monomers may be present at up to 50 wt%, preferably from 0 wt% to 40 wt%, more preferably from 0.5 wt% to 30 wt%, more preferably from 2 wt% to 30 wt%, more preferably from 5 wt% to 20 wt%.

Preferred linear alpha-olefins useful as comonomers for the ethylene copolymers useful in this invention include $C_3$ to $C_8$ alpha-olefins, more preferably 1-butene, 1-hexene, and 1-octene, even more preferably 1-hexene. Preferred branched alpha-olefins include 4-methyl-1-pentene, 3-methyl-1-pentene, 3,5,5-trimethyl-1-hexene, and 5-ethyl-1-nonene. Preferred aromatic-group-containing monomers contain up to 30 carbon atoms. Suitable aromatic-group-containing monomers comprise at least one aromatic structure, preferably from one to three, more preferably a phenyl, indenyl, fluorenyl, or naphthyl moiety. The aromatic-group-containing monomer further comprises at least one polymerizable double bond such that after polymerization, the aromatic structure will be pendant from the polymer backbone. The aromatic-group containing monomer may further be substituted with one or more hydrocarbyl groups including, but not limited to, $C_1$ to $C_{10}$ alkyl groups. Additionally, two adjacent substitutions may be joined to form a ring structure. Preferred aromatic-group-containing monomers contain at least one aromatic structure appended to a polymerizable olefinic moiety. Particularly, preferred aromatic monomers include styrene, alphamethylstyrene, para-alkylstyrenes, vinyltoluenes, vinylnaphthalene, allyl benzene, and indene; especially styrene, paramethyl styrene, 4-phenyl-1-butene, and allyl benzene.

Preferred diolefin monomers useful in this invention include any hydrocarbon structure, preferably $C_4$ to $C_{30}$, having at least two unsaturated bonds, wherein at least two of the unsaturated bonds are readily incorporated into a polymer by either a stereospecific or a non-stereospecific catalyst(s). It is further preferred that the diolefin monomers be selected from alpha, omega-diene monomers (i.e., di-vinyl monomers). More preferably, the diolefin monomers are linear di-vinyl monomers, most preferably those containing from 4 to 30 carbon atoms. Examples of preferred dienes include butadiene, pentadiene, hexadiene, heptadiene, octadiene, nonadiene, decadiene, undecadiene, dodecadiene, tridecadiene, tetradecadiene, pentadecadiene, hexadecadiene, heptadecadiene, octadecadiene, nonadecadiene, icosadiene, heneicosadiene, docosadiene, tricosadiene, tetracosadiene, pentacosadiene, hexacosadiene, heptacosadiene, octacosadiene, nonacosadiene, triacontadiene, particularly preferred dienes include 1,6-heptadiene, 1,7-octadiene, 1,8-nonadiene, 1,9-decadiene, 1,10-undecadiene, 1,11-dodecadiene, 1,12-tridecadiene, 1,13-tetradecadiene, and low molecular weight polybutadienes ($M_w$ less than 1000 g/mol). Preferred cyclic dienes include cyclopentadiene, vinylnorbornene, norbornadiene, ethylidene norbornene, divinylbenzene, dicyclopentadiene or higher ring containing diolefins with or without substituents at various ring positions.

The melt index (MI) of preferred ethylene polymers, as measured according to ASTM D1238 (190°C, 2.16 kg), ranges from 0.02 dg/min to 800 dg/min in one embodiment, from 0.05 to 500 dg/min in another embodiment, and from 0.1 to 100 dg/min in another embodiment. In another embodiment of the present invention, the polyethylene has a MI of 20 dg/min or less, 7 dg/min or less, 5 dg/min or less, or 2 dg/min or less, or less than 2 dg/min. In yet another embodiment, the polymer has a Mooney viscosity, ML(1+4) @ 125°C (measured according to ASTM D1646) of 100 or less, 75 or less, 60 or less, or 30 or less.

In yet another embodiment, the 1% secant flexural modulus of preferred ethylene polymers ranges from 5 MPa to 1000 MPa, and from 10 MPa to 800 MPa in another embodiment, and from 5 MPa to 200 MPa in yet another embodiment, wherein a desirable polymer may exhibit any combination of any upper flexural modulus limit with any lower flexural modulus limit.

The crystallinity of the polymer may also be expressed in terms of crystallinity percent. The thermal energy for the highest order of polyethylene is estimated at 290 J/g. That is, 100% crystallinity is equal to 290 J/g. Preferably, the polymer has a crystallinity (as determined by DSC as described in the Test methods section below) within the range having an upper limit of 80%, 60%, 40%, 30%, or 20%, and a lower limit of 1%, 3%, 5%, 8%, or 10%. Alternately, the polymer has a crystallinity of 5% to 80%, preferably 10% to 70%, more preferably 20% to 60%. (Alternatively, the polyethylene may have a crystallinity of at least 30%, preferably at least 40%, alternatively at least 50%, where crystallinity is determined.)

The level of crystallinity may be reflected in the melting point. In one embodiment of the present invention, the ethylene polymer has a single melting point. Typically, a sample of ethylene copolymer will show secondary melting peaks adjacent to the principal peak, which is considered together as a single melting point. The highest of these peaks is considered the melting point. The polymer preferably has a melting point (as determined by DSC as described in the Test Methods section below) ranging from an upper limit of 150°C, 130°C, or 100°C to a lower limit of 0°C, 30°C, 35°C, 40°C, or 45°C.

Preferred ethylene copolymers useful herein are preferably a copolymer comprising at least 50 wt% ethylene and having up to 50 wt%, preferably 1 wt% to 35 wt%, even more preferably 1 wt% to 6 wt% of a $C_3$ to $C_{20}$ comonomer (preferably hexene or octene), based upon the weight of the copolymer. The polyethylene copolymers have a composition distribution breadth index (CDBI) of 60% or more, preferably 60% to 80%, preferably 65% to 80%. In another preferred embodiment, the ethylene copolymer has a density of 0.910 to 0.950 g/cm$^3$ (preferably 0.915 to 0.940 g/cm$^3$, preferably 0.918 to 0.925 g/cm$^3$) and a CDBI of 60% to 80%, preferably between 65% and 80%. Preferably, these polymers are metallocene polyethylenes (mPEs).

Further useful mPEs include those described in U.S. Patent Application Publication No. 2007/0260016 and U.S. Patent No. 6,476,171, e.g., copolymers of an ethylene and at least one alpha olefin having at least 5 carbon atoms obtainable by a continuous gas phase polymerization using supported catalyst of an activated molecularly discrete catalyst in the substantial absence of an aluminum alkyl based scavenger (e.g., triethylaluminum, trimethylaluminum, tri-isobutyl aluminum, tri-n-hexylaluminum, and the like), which polymer has a Melt Index of from 0.1 to 15 (ASTM D 1238, condition E); a CDBI of at least 70%; a density of from 0.910 to 0.930 g/cc; a Haze (ASTM D1003) value of less than 20; a Melt Index ratio (121/11, ASTMD 1238) of from 35 to 80; an averaged Modulus (M) (as defined in U.S. Patent No. 6,255,426) of from 20,000 to 60,000 psi (13790 to 41369 N/cm$^2$) and a relation between M and the Dart Impact Strength (26 inch, ASTM D 1709) in g/mil (DIS) complying with the formula:

$$DIS \geq 0.8 \text{ x } [100+e^{(11.71-0.000268xM+2.183x10^{-9}xM^2)}],$$

where "e" represents 2.1783, the base Napierian logarithm; M is the averaged Modulus in psi; and DIS is the 26 inch (66cm) dart impact strength.

Useful mPE homopolymers or copolymers may be produced using mono- or bis-cyclopentadienyl transition metal catalysts in combination with an activator of alumoxane and/or a non-coordinating anion in solution, slurry, high pressure, or gas phase. The catalyst and activator may be supported or unsupported and the cyclopentadienyl rings by may substituted or unsubstituted. Several commercial products produced with such catalyst/activator combinations are commercially available from ExxonMobil Chemical Company in Baytown, Texas under the tradename EXCEED™ Polyethylene or ENABLE™ Polyethylene.

Additives

The polyethylene compositions of the present invention may also contain other additives. Those additives include antioxidants, nucleating agents, acid scavengers, stabilizers, anticorrosion agents, plasticizers, blowing agents, cavitating agents, surfactants, adjuvants, block, antiblock, UV absorbers such as chain-breaking antioxidants, oils, etc., quenchers, antistatic agents, slip agents, processing aids, UV stabilizers, neutralizers, lubricants, waxes, color masterbatches, pigments, dyes and fillers, and cure agents such as peroxide. In a preferred embodiment, the additives may each individually present at 0.01 wt% to 50 wt% in one embodiment, from 0.01 wt% to 10 wt% in another embodiment, and from 0.1 wt% to 6 wt% in another embodiment, based upon the weight of the composition. In a preferred embodiment, dyes and other colorants common in the industry may be present from 0.01 wt% to 10 wt% in one embodiment and from 0.1 wt% to 6 wt% in another embodiment, based upon the weight of the composition. Preferred fillers, cavitating agents and/or nucleating agents include titanium dioxide, calcium carbonate, barium sulfate, silica, silicon dioxide, carbon black, sand, glass beads, mineral aggregates, talc, clay, and the like.

In particular, antioxidants and stabilizers such as organic phosphites, hindered amines, and phenolic antioxidants may be present in the polyethylene compositions of the invention from 0.001 wt% to 2 wt%, based upon the weight of the composition in one embodiment, from 0.01 wt% to 0.8 wt% in another embodiment, and from 0.02 wt% to 0.5 wt% in yet another embodiment. Non-limiting examples of organic phosphites that are suitable are tris(2,4-di-tert-butylphenyl)phosphite (IRGAFOS 168) and di(2,4-di-tert-butylphenyl)pentaerithritol diphosphite (ULTRANOX 626). Non-limiting examples of hindered amines include poly[2-N,N'-di(2,2,6,6-tetramethyl-4-piperidinyl)-hexanediamine-4-(1-amino-1,1,3,3-tetramethylbutane)sym-triazine] (CHIMASORB 944); bis(1,2,2,6,6-pentamethyl-4-piperidyl)sebacate (TINUVIN 770). Non-limiting examples of phenolic antioxidants include pentaerythrityl tetrakis(3,5-di-tert-butyl-4-hydroxyphenyl) propionate (IRGANOX 1010); and 1,3,5-Tri(3,5-di-tert-butyl-4-hydroxybenzyl-isocyanurate (IRGANOX 3114).

Fillers may be present from 0.001 wt% to 50 wt% in one embodiment, from 0.01 wt% to 25 wt% in another embodiment, and from 0.2 wt% to 10 wt% in yet another embodiment, based upon the weight of the composition. Desirable fillers include, but are not limited to, titanium dioxide, silicon carbide, silica (and other oxides of silica, precipitated or not), antimony oxide, lead carbonate, zinc white, lithopone, zircon, corundum, spinel, apatite, Barytes powder, barium sulfate, magnesiter, carbon black, dolomite, calcium carbonate, talc and hydrotalcite compounds of the ions Mg, Ca, or Zn with Al, Cr or Fe and $CO_3$, and/or $HPO_4$, hydrated or not; quartz powder, hydrochloric magnesium carbonate, glass fibers, clays, alumina, and other metal oxides and carbonates, metal hydroxides, chrome, phosphorous and brominated flame retardants, antimony trioxide, silica, silicone, and blends thereof. These fillers may particularly include any other fillers and porous fillers and supports known in the art, and may have the modifier of the invention pre-contacted, or pre-absorbed into the filler prior to addition to the ethylene polymer in one embodiment.

Metal salts of fatty acids may also be present in the polyethylene compositions of the present invention. Such salts may be present from 0.001 wt% to 1 wt% of the composition in one embodiment and from 0.01 wt% to 0.8 wt% in another embodiment. Examples of fatty acids include lauric acid, stearic acid, succinic acid, stearyl lactic acid, lactic acid, phthalic acid, benzoic acid, hydroxystearic acid, ricinoleic acid, naphthenic acid, oleic acid, palmitic acid, erucic acid, or any monocarboxylic aliphatic saturated or unsaturated acid having a chain length of 7 to 22 carbon atoms. Suitable metals include Li, Na, Mg, Ca, Sr, Ba, Zn, Cd, Al, Sn, Pb, and so forth. Preferably, metal salts of fatty acids are magnesium stearate, calcium stearate, sodium stearate, zinc stearate, calcium oleate, zinc oleate, and magnesium oleate.

In a preferred embodiment, slip additives may be present in the compositions of this invention. Preferably, the slip additives are present at 0.001 wt% to 1 wt% (10 ppm to 10,000 ppm), more preferably 0.01 wt% to 0.5 wt% (100 ppm to 5000 ppm), more preferably 0.1 wt% to 0.3 wt% (1000 ppm to 3000 ppm), based upon the weight of the composition. Desirable slip additives include, but are not limited to, saturated fatty acid amides (such as palmitamide, stearamide, arachidamide, behenamide, stearyl stearamide, palmityl pamitamide, and stearyl arachidamide); saturated ethylene-bis-amides (such as stearamido-ethyl-stearamide, stearamido-ethyl-palmitamide, and palmitamido-ethyl-stearamide); unsaturated fatty acid amides (such as oleamide, erucamide, and linoleamide); unsaturated ethylene-bis-amides (such as ethylene-bis-stearamide, ethylene-bis-oleamide, stearyl-erucamide, erucamido-ethyl-erucamide, oleamido-ethyl-oleamide, erucamido-ethyl-oleamide, oleamido-ethy-lerucamide, stearamido-ethyl-erucamide, erucamido-ethyl-palmitamide, and palmitamido-ethyl-oleamide); glycols; polyether polyols (such as Carbowax); acids of aliphatic hydrocarbons (such as adipic acid and sebacic acid); esters of aromatic or aliphatic hydrocarbons (such as glycerol monostearate and pentaerythritol monooleate); styrene-alpha-methyl styrene; fluoro-containing polymers (such as polytetrafluoroethylene, fluorine oils, and fluorine waxes); silicon compounds (such as silanes and silicone polymers, including silicone oils, modified silicones and cured silicones); sodium alkylsulfates, alkyl phosphoric acid esters; and mixtures thereof. Preferred slip additives are unsaturated fatty acid amides, which are commercially available from Crompton (Kekamide™ grades), Croda Universal (Crodamide™ grades), and Akzo Nobel Amides Co. Ltd. (ARMOSLIP™ grades). Particularly, preferred slip agents include unsaturated fatty acid amides having the chemical structure:

$$CH_3(CH_2)_7CH{=}CH(CH_2)_xCONH_2$$

where x is 5 to 15. Preferred versions include: 1) Erucamide, where x is 11, also referred to as cis-13-docosenoamide (commercially available as ARMOSLIP E); 2) Oleylamide, where x is 8; and 3) Oleamide, where x is 7, also referred to as N-9-octadecenyl-hexadecanamide. In another embodiment, stearamide is also useful in this invention. Other preferred slip additives include those described in WO 2004/005601A1.

In some embodiments, the polyethylene compositions produced by this invention may be blended with one or more other polymers including, but not limited to, thermoplastic polymer(s) and/or elastomer(s).

By "thermoplastic polymer(s)" is meant a polymer that can be melted by heat and then cooled without appreciable change in solid-state properties before and after heating. Thermoplastic polymers typically include, but are not limited to, polyolefins, polyamides, polyesters, polycarbonates, polysulfones, polyacetals, polylactones, acrylonitrile-butadienestyrene resins, polyphenylene oxide, polyphenylene sulfide, styrene-acrylonitrile resins, styrene maleic anhydride, polyimides, aromatic polyketones, or mixtures of two or more of the above. Preferred polyolefins include, but are not limited to, polymers comprising one or more linear, branched or cyclic $C_2$ to $C_{40}$ olefins, preferably polymers comprising ethylene copolymerized with one or more $C_3$ to $C_{40}$ olefins, preferably a $C_3$ to $C_{20}$ alpha olefin, more preferably $C_3$ to $C_{10}$ alpha-olefins. A particularly preferred example is polybutene. The most preferred polyolefin is polypropylene. Other preferred polyolefins include, but are not limited to, polymers comprising ethylene including, but not limited to, ethylene copolymerized with a $C_3$ to $C_{40}$ olefin, preferably a $C_3$ to $C_{20}$ alpha olefin, more preferably propylene, butene, hexene, and/or octene.

By "elastomers" is meant all natural and synthetic rubbers, including those defined in ASTM D1566. Examples of preferred elastomers include, but are not limited to, ethylene propylene rubber, ethylene propylene diene monomer rubber, styrenic block copolymer rubbers (including SEBS, SI, SIS, SB, SBS, SIBS, and the like, where S = styrene, EB = random ethylene + butene, I = isoprene, and B = butadiene), butyl rubber, halobutyl rubber, copolymers of isobutylene and para-alkylstyrene, halogenated copolymers of isobutylene and para-alkylstyrene, natural rubber, polyisoprene, copolymers of butadiene with acrylonitrile, polychloroprene, alkyl acrylate rubber, chlorinated isoprene rubber, acrylonitrile chlorinated isoprene rubber, and polybutadiene rubber (both cis and trans).

In another embodiment, the blend comprising the modifier may further be combined with one or more polymers polymerizable by a high-pressure free radical process, polyvinylchloride, polybutene-1, isotactic polybutene, ABS resins, block copolymer, styrenic block copolymers, polyamides, polycarbonates, PET resins, crosslinked polyethylene, copolymers of ethylene and vinyl alcohol (EVOH), polymers of aromatic monomers such as polystyrene, poly-1 esters, polyacetal, polyvinylidine fluoride, polyethylene glycols, and/or polyisobutylene.

Tackifiers may be blended with the ethylene compositions of this invention. Examples of useful tackifiers include, but are not limited to, aliphatic hydrocarbon resins, aromatic modified aliphatic hydrocarbon resins, hydrogenated polycyclopentadiene resins, polycyclopentadiene resins, gum rosins, gum rosin esters, wood rosins, wood rosin esters, tall oil rosins, tall oil rosin esters, polyterpenes, aromatic modified polyterpenes, terpene phenolics, aromatic modified hydrogenated polycyclopentadiene resins, hydrogenated aliphatic resin, hydrogenated aliphatic aromatic resins, hydrogenated terpenes, modified terpenes, and hydrogenated rosin esters. In some embodiments, the tackifier is hydrogenated. In other embodiments, the tackifier is non-polar. (Non-polar is meant that the tackifier is substantially free of monomers having polar groups. Preferably, the polar groups are not present; however, if they are, preferably they are not present at more that 5 wt%, preferably not more than 2 wt%, even more preferably no more than 0.5 wt%, based upon the weight of the tackifier.) In some embodiments, the tackifier has a softening point (Ring and Ball, as measured by ASTM E-28) of 80°C to 140°C, preferably 100°C to 130°C. The tackifier, if present, is typically present at 1 wt% to 50 wt%, based upon the weight of the blend, more preferably 10 wt% to 40 wt%, even more preferably 20 wt% to 40 wt%. Preferably, however, tackifier is not present, or if present, is present at less than 10 wt%, preferably less than 5 wt%, more preferably at less than 1 wt%.

## Blending and Processing

The compositions and blends described herein may be formed using conventional equipment and methods, such as by dry blending the individual components and subsequently melt mixing in a mixer, or by mixing the components together directly in a mixer, such as, for example, a Banbury mixer, a Haake mixer, a Brabender internal mixer, or a single or twin-screw extruder, which may include a compounding extruder and a side-arm extruder used directly downstream of a polymerization process. Additionally, additives may be included in the blend, in one or more components of the blend, and/or in a product formed from the blend, such as a film, as desired. Such additives are well known in the art, and can include, for example: fillers; antioxidants (e.g., hindered phenolics such as IRGANOX™ 1010 or IRGANOX™ 1076 available from Ciba-Geigy); phosphites (e.g., IRGAFOS™ 168 available from Ciba-Geigy); anti-cling additives; tackifiers, such as polybutenes, terpene resins, aliphatic and aromatic hydrocarbon resins, alkali metal and glycerol stearates and hydrogenated rosins; UV stabilizers; heat stabilizers; antiblocking agents; release agents; anti-static agents; pigments; colorants; dyes; waxes; silica; fillers; talc; and the like.

The polymers suitable for use in the present invention can be in any physical form when used to blend with the modifier of the invention. In one embodiment, reactor granules, defined as the granules of polymer that are isolated from the polymerization reactor prior to any processing procedures, are used to blend with the modifier of the invention. The reactor granules typically have an average diameter of from 50 μm to 10 mm in one embodiment, and from 10 μm to 5 mm in another embodiment. In another embodiment, the polymer is in the form of pellets, such as, for example, having an average diameter of from 1 mm to 10 mm that are formed from melt extrusion of the reactor granules.

The components of the present invention can be blended by any suitable means, and are typically blended to yield an intimately mixed composition which may be a homogeneous, single phase mixture. For example, they may be blended in a static mixer, batch mixer, extruder, or a combination thereof, that is sufficient to achieve an adequate dispersion of modifier in the polymer.

The mixing step may involve first dry blending using, for example, a tumble blender, where the polymer and modifier are brought into contact first, without intimate mixing, which may then be followed by melt blending in an extruder. Another method of blending the components is to melt blend the polymer pellets with the modifier directly in an extruder or batch mixer. It may also involve a "master batch" approach, where the final modifier concentration is achieved by combining neat polymer with an appropriate amount of modified polymer that had been previously prepared at a higher modifier concentration. The mixing step may take place as part of a processing method used to fabricate articles, such as in the extruder on an injection molding machine or blown-film line or fiber line.

In a preferred aspect of the invention, the ethylene polymer and modifier are "melt blended" in an apparatus such as an extruder (single or twin screw) or batch mixer. The ethylene polymer may also be "dry blended" with the modifier using a tumbler, double-cone blender, ribbon blender, or other suitable blender. In yet another embodiment, the ethylene polymer and modifier are blended by a combination of approaches, for example a tumbler followed by an extruder. A preferred method of blending is to include the final stage of blending as part of an article fabrication step, such as in the extruder used to melt and convey the composition for a molding step like injection molding or blow molding. This could include direct injection of the modifier into the extruder, either before or after the polyethylene is fully melted. Extrusion technology for polyethylene is described in more detail in, for example, PLASTICS EXTRUSION TECHNOLOGY 26-37 (Friedhelm Hensen, ed. Hanser Publishers 1988).

In another aspect of the invention, the polyethylene composition may be blended in solution by any suitable means, by using a solvent that dissolves both components to a significant extent. The blending may occur at any temperature or pressure where the modifier and the ethylene polymer remain in solution. Preferred conditions include blending at high temperatures, such as 10°C or more, preferably 20°C or more, over the melting point of the ethylene polymer. Such solution blending would be particularly useful in processes where the ethylene polymer is made by solution process and the modifier is added directly to the finishing train, rather than added to the dry polymer in another blending step altogether. Such solution blending would also be particularly useful in processes where the ethylene polymer is made in a bulk or high pressure process where both the polymer and the modifier were soluble in the monomer. As with the solution process, the modifier is added directly to the finishing train, rather than added to the dry polymer in another blending step altogether.

Thus, in the cases of fabrication of articles using methods that involve an extruder, such as injection molding or blow molding, any means of combining the polyethylene and modifier to achieve the desired composition serve equally well as fully formulated pre-blended pellets, since the forming process includes a re-melting and mixing of the raw material; example combinations include simple blends of neat polymer pellets and modifier, of neat polymer granules and modifier, of neat polymer pellets and pre-blended pellets, and neat polymer granules and pre-blended pellets. Here, "pre-blended pellets" means pellets of a polyethylene composition comprising ethylene polymer and modifier at some concentration. In the process of compression molding, however, little mixing of the melt components occurs, and pre-blended pellets would be preferred over simple blends of the constituent pellets (or granules) and modifier. Those skilled in the art will be able to determine the appropriate procedure for blending of the polymers to balance the need for intimate mixing of the component ingredients with the desire for process economy.

Applications

The enhanced properties of the polyethylene compositions described herein are useful in a wide variety of applications, including transparent articles such as cook and storage ware, and in other articles such as furniture, automotive components, toys, sportswear, medical devices, sterilizable medical devices and sterilization containers, nonwoven fibers and fabrics and articles therefrom such as drapes, gowns, filters, hygiene products, diapers, films, oriented films, sheets, tubes, pipes, and other items where softness, high impact strength, and impact strength below freezing is important.

Additional examples of desirable articles of manufacture made from compositions of the invention include films, sheets, fibers, woven and nonwoven fabrics, automotive components, furniture, sporting equipment, food storage containers, transparent and semitransparent articles, toys, tubing and pipes, sheets, packaging, bags, sacks, coatings, caps, closures, crates, pallets, cups, non-food containers, pails, insulation, and medical devices. Further examples include automotive components, wire and cable jacketing, pipes, agricultural films, geomembranes, toys, sporting equipment, medical devices, casting and blowing of packaging films, extrusion of tubing, pipes and profiles, sporting equipment, outdoor furniture (e.g., garden furniture) and playground equipment, boat and water craft components, and other such articles. In particular, the compositions are suitable for automotive components such as bumpers, grills, trim parts, dashboards and instrument panels, exterior door and hood components, spoiler, wind screen, hub caps, mirror housing, body panel, protective side molding, and other interior and external components associated with automobiles, trucks, boats, and other vehicles.

Other useful articles and goods may be formed economically by the practice of our invention including: crates, containers, packaging, labware, such as roller bottles for culture growth and media bottles, office floor mats, instrumentation sample holders and sample windows; liquid storage containers such as bags, pouches, and bottles for storage and IV infusion of blood or solutions; and packaging material including those for any medical device or drugs including unit-dose or other blister or bubble pack as well as for wrapping or containing food preserved by irradiation. Other useful items include medical tubing and valves for any medical device including infusion kits, catheters, and respiratory therapy, as well as packaging materials for medical devices or food which is irradiated including trays, as well as stored liquid, particularly water, milk, or juice, containers including unit servings and bulk storage containers as well as transfer means such as tubing, pipes, and such.

Fabrication of these articles may be accomplished by injection molding, extrusion, thermoforming, blow molding, rotational molding (rotomolding), fiber spinning, spin bonding or melt blown bonding such as for non-woven fabrics, film blowing, stretching for oriented films, casting such as for films (including use of chill rolls), profile deformation, coating (film, wire, and cable), compression molding, calendering, foaming, laminating, transfer molding, cast molding, pultrusion, protrusion, draw reduction, and other common processing methods, or combinations thereof, such as is known in the art and described in, for example, PLASTICS PROCESSING (Radian Corporation, Noyes Data Corp. 1986). Use of at least thermoforming or film applications allows for the possibility of and derivation of benefits from uniaxial or biaxial orientation. Sufficient mixing should take place to assure that an intimately mixed, preferably uniform, blend will be produced prior to conversion into a finished product.

Adhesives

The polymers of this invention or blends thereof can be used as adhesives, either alone or combined with tackifiers. Preferred tackifiers are described above. The tackifier is typically present at 1 wt% to 50 wt%, based upon the weight of the blend, more preferably 10 wt% to 40 wt%, even more preferably 20 wt% to 40 wt%. Other additives, as described above, may be added also.

The adhesives of this invention can be used in any adhesive application including, but not limited to, disposables, packaging, laminates, pressure sensitive adhesives, tapes labels, wood binding, paper binding, non-wovens, road marking, reflective coatings, and the like. In a preferred embodiment, the adhesives of this invention can be used for disposable diaper and napkin chassis construction, elastic attachment in disposable goods converting, packaging, labeling, bookbinding, woodworking, and other assembly applications. Particularly preferred applications include: baby diaper leg elastic, diaper frontal tape, diaper standing leg cuff, diaper chassis construction, diaper core stabilization, diaper liquid transfer layer, diaper outer cover lamination, diaper elastic cuff lamination, feminine napkin core stabilization, feminine napkin adhesive strip, industrial filtration bonding, industrial filter material lamination, filter mask lamination, surgical gown lamination, surgical drape lamination, and perishable products packaging.

Films

The compositions described above and the blends thereof may be formed into monolayer or multilayer films. These films may be formed by any of the conventional techniques known in the art including extrusion, co-extrusion, extrusion coating, lamination, blowing, and casting. The film may be obtained by the flat film or tubular process which may be followed by orientation in a uniaxial direction or in two mutually perpendicular directions in the plane of the film. One or more of the layers of the film may be oriented in the transverse and/or longitudinal directions to the same or different extents. This orientation may occur before or after the individual layers are brought together. For example, a polyethylene layer can be extrusion coated or laminated onto an oriented polypropylene layer or the polyethylene and polypropylene can be coextruded together into a film then oriented. Likewise, oriented polypropylene could be laminated to oriented polyethylene or oriented polyethylene could be coated onto polypropylene then optionally the combination could be oriented even further. Typically, the films are oriented in the Machine Direction (MD) at a ratio of up to 15, preferably between 5 and 7, and in the Transverse Direction (TD) at a ratio of up to 15, preferably 7 to 9. However, in another embodiment, the film is oriented to the same extent in both the MD and TD directions.

In multilayer constructions, the other layer(s) may be any layer typically included in multilayer film structures. For example, the other layer or layers may be:

1. Polyolefins. Preferred polyolefins include homopolymers or copolymers of $C_2$ to $C_{40}$ olefins, preferably $C_2$ to $C_{20}$ olefins, preferably a copolymer of an alpha-olefin and another olefin or alpha-olefin (ethylene is defined to be an alpha-olefin for purposes of this invention). Preferably homopolyethylene, homopolypropylene, propylene copolymerized with ethylene and or butene, ethylene copolymerized with one or more of propylene, butene or hexene, and optional dienes. Preferred examples include thermoplastic polymers such as ultra low density polyethylene, very low density polyethylene, linear low density polyethylene, low density polyethylene, medium density polyethylene, high density polyethylene, polypropylene, isotactic polypropylene, highly isotactic polypropylene, syndiotactic polypropylene, random copolymer of propylene and ethylene and/or butene and/or hexene, elastomers such as ethylene propylene rubber, ethylene propylene diene monomer rubber, neoprene, and blends of thermoplastic polymers and elastomers, such as, for example, thermoplastic elastomers and rubber toughened plastics.
2. Polar polymers. Preferred polar polymers include homopolymers and copolymers of esters, amides, acetates, anhydrides, copolymers of a $C_2$ to $C_{20}$ olefin, such as ethylene and/or propylene and/or butene with one or more polar monomers such as acetates, anhydrides, esters, alcohol, and/or acrylics. Preferred examples include polyesters, polyamides, ethylene vinyl acetate copolymers, and polyvinyl chloride.
3. Cationic polymers. Preferred cationic polymers include polymers or copolymers of geminally disubstituted olefins, alpha-heteroatom olefins and/or styrenic monomers. Preferred geminally disubstituted olefins include isobutylene, isopentene, isoheptene, isohexane, isooctene, isodecene, and isododecene. Preferred alpha-heteroatom olefins include vinyl ether and vinyl carbazole, preferred styrenic monomers include styrene, alkyl styrene, para-alkyl styrene, alpha-methyl styrene, chloro-styrene, and bromo-paramethyl styrene. Preferred examples of cationic polymers include butyl rubber, isobutylene copolymerized with para methyl styrene, polystyrene, and poly-alpha-methyl styrene.
4. Miscellaneous. Other preferred layers can be paper, wood, cardboard, metal, metal foils (such as aluminum foil and tin foil), metallized surfaces, glass (including silicon oxide ($SiO_x$) coatings applied by evaporating silicon oxide onto a film surface), fabric, spunbonded fibers, and non-wovens (particularly polypropylene spun bonded fibers or non-wovens), and substrates coated with inks, dyes, pigments, and the like.

The films may vary in thickness depending on the intended application; however, films of a thickness from 1 μm to 250 μm are usually suitable. Films intended for packaging are usually from 10 to 60 micron thick. The thickness of the sealing layer is typically 0.2 μm to 50 μm. There may be a sealing layer on both the inner and outer surfaces of the film or the sealing layer may be present on only the inner or the outer surface.

Additives such as block, antiblock, antioxidants, pigments, fillers, processing aids, UV stabilizers, neutralizers, lubricants, surfactants, and/or nucleating agents may also be present in one or more than one layer in the films. Preferred additives include silicon dioxide, titanium dioxide, polydimethylsiloxane, talc, dyes, wax, calcium sterate, carbon black, low molecular weight resins and glass beads, preferably these additives are present at from 0.1 ppm to 1000 ppm.

In another embodiment, one more layers may be modified by corona treatment, electron beam irradiation, gamma irradiation, or microwave irradiation. In a preferred embodiment, one or both of the surface layers is modified by corona treatment.

The films described herein may also comprise from 5 wt% to 60 wt%, based upon the weight of the polymer and the resin, of a hydrocarbon resin. The resin may be combined with the polymer of the seal layer(s) or may be combined with the polymer in the core layer(s). The resin preferably has a softening point above 100°C, even more preferably from 130°C to 180°C. Preferred hydrocarbon resins include those described above. The films comprising a hydrocarbon resin may be oriented in uniaxial or biaxial directions to the same or different degrees. For more information on blends of tackifiers and modifiers useful herein, see USSN 60/617,594, filed October 8, 2004.

The films described above may be used as stretch and/or cling films. Stretch/cling films are used in various bundling, packaging, and palletizing operations. To impart cling properties to, or improve the cling properties of, a particular film, a number of well-known tackifying additives have been utilized. Common tackifying additives include polybutenes, terpene resins, alkali metal stearates, and hydrogenated rosins and rosin esters. The cling properties of a film can also be modified by the well-known physical process referred to as corona discharge. Some polymers (such as ethylene methyl acrylate copolymers) do not need cling additives and can be used as cling layers without tackifiers. Stretch/clings films may comprise a slip layer comprising any suitable polyolefin or combination of polyolefins such as polyethylene, polypropylene, copolymers of ethylene and propylene, and polymers obtained from ethylene and/or propylene copolymerized with minor amounts of other olefins, particularly $C_4$ to $C_{12}$ olefins. Particularly preferred is linear low density polyethylene (LLDPE). Additionally, the slip layer may include one or more anticling (slip and/or antiblock) additives which may be added during the production of the polyolefin or subsequently blended in to improve the slip properties of this layer. Such additives are well-known in the art and include, for example, silicas, silicates, diatomaceous earths, talcs, and various lubricants. These additives are preferably utilized in amounts ranging from 100 ppm to 20,000 ppm, more preferably between 500 ppm to 10,000 ppm, by weight based upon the weight of the slip layer. The slip layer may, if desired, also include one or more other additives as described above.

In another embodiment of the invention, films comprising blends described herein have a gauge variation that is at least 10% lower than that of film of the same thickness and of the same composition, absent the modifier, prepared under the same conditions and a dart impact strength that is within 20% of a film of the same thickness and of the same composition, absent the modifier, prepared under the same conditions.

In another embodiment of the invention, films comprising blends described herein have a gauge variation that is at least 10% lower than that of film of the same thickness and of the same composition, absent the modifier, prepared under the same conditions and an MD Tear strength that is within 20% of a film of the same thickness and of the same composition, absent the modifier, prepared under the same conditions.

In another embodiment of the invention, films comprising blends described herein have a haze that is at least 10% lower than that of film of the same thickness and of the same composition, absent the modifier, prepared under the same conditions and a dart impact strength that is within 20% of a film of the same thickness and of the same composition, absent the modifier, prepared under the same conditions.

In another embodiment of the invention, films comprising blends described herein have a haze that is at least 10% lower than that of film of the same thickness and of the same composition, absent the modifier, prepared under the same conditions and an MD Tear strength that is within 20% of a film of the same thickness and of the same composition, absent the modifier, prepared under the same conditions.

In another embodiment of the invention, films comprising blends described herein have a haze of 10% or less.

In another embodiment of the invention, films comprising blends described herein have a haze that is at least 10% less than the haze measured on a film of the same thickness and of the same composition, absent the HDPE modifier, prepared under the same conditions.

In another embodiment of the invention, films comprising blends described herein have a gauge variation that is at least 10% less than the gauge variation measured on a film of the same thickness and of the same composition, absent the HDPE modifier, prepared under the same conditions.

In another embodiment of the invention, films comprising blends described herein have a dart impact strength that is greater than or within 30% less than the dart impact strength measured on a film of the same thickness and of the same composition, absent the HDPE modifier, prepared under the same conditions.

In another embodiment of the invention, films comprising blends described herein have an MD Tear strength that is greater than or within 30% less than the MD Tear strength measured on a film of the same thickness and of the same composition, absent the HDPE modifier, prepared under the same conditions.

In another embodiment of the invention, films comprising blends described herein have a gauge variation that is at least 10% less than the gauge variation measured on a film of the same thickness and of the same composition, absent the HDPE modifier, prepared under the same conditions, and the film has a Dart Drop, in g/mil, that within 30% of the Dart Drop measured on a film of the same thickness and of the same composition, absent the HDPE modifier, prepared under the same conditions.

In another embodiment of the invention, films comprising blends described herein have a gauge variation that is at least 10% less than the gauge variation measured on a film of the same thickness and of the same composition, absent the HDPE modifier, prepared under the same conditions, and the film has an MD Tear strength that is greater than or within 30% less than the MD Tear strength measured on a film of the same thickness and of the same composition, absent the HDPE modifier, prepared under the same conditions.

In another embodiment of the invention, films comprising blends described herein have a strain hardening ratio that is at least 10% greater than the strain hardening ratio measured on a composition, absent the HDPE modifier, and the film has a Dart Drop, in g/mil, that within 30% of the Dart Drop measured on a film of the same thickness and of the same composition, absent the HDPE modifier, prepared under the same conditions.

In another embodiment of the invention, films comprising blends described herein have a gauge variation that is at least 10% less than the gauge variation measured on a film of the same thickness and of the same composition, absent the HDPE modifier, prepared under the same conditions, and the film has a haze that is at least 10% less than haze measured on a film of the same thickness and of the same composition, absent the HDPE modifier, prepared under the same conditions.

In a preferred embodiment, films prepared from the compositions described herein have improved bubble stability compared to the ethylene copolymers of the compositions alone as determined by reduced gauge variation, e.g., a gauge variation of 10% or less, preferably 8% or less, preferably 5% or less.

In a preferred embodiment, films prepared from the compositions described herein have excellent optical properties, such as a haze (ASTM D1003) of 20% or less, preferably 15% or less, preferably 10% or less.

In a preferred embodiment, films, preferably blown films prepared from the blends described herein, have one or more of the following properties:

a) 1% Secant Flexural Modulus (MD) of greater than 170 MPa (25,000 psi), preferably greater than 27,000; and/or
b) 1% Secant Flexural Modulus (TD) of greater than 170 MPa (25,000 psi), preferably greater than 25,000 psi; and/or
c) Tensile Strength at Yield (MD) of greater than 8.3 MPa (1200 psi), preferably greater than 1300 psi; and/or
d) Tensile Strength at Yield (TD) of greater than 8.3 MPa (1200 psi), preferably greater than 1400 psi; and/or
e) Elongation at Yield (MD) of 6% or more, preferably 7% or more; and/or
f) Elongation at Yield (TD) of 5% or more, preferably 6% or more, preferably 7% or more; and/or
g) Tensile Strength (MD) of 48 MPa (7000 psi) or more, preferably 52 MPa (7500 psi) or more; and/or
h) Tensile Strength (TD) 48 MPa (7000 psi) or more, preferably 52 MPa (7500 psi) or more; and/or
i) Elongation at Break (MD) 650% or more, preferably 680% or more; and/or
j) Elongation at Break (TD) 630% or more, preferably 650% or more, preferably 680% or more; and/or
k) Elmendorf Tear (MD) of at least 400 g; and/or
l) Elmendorf Tear (TD) of at least 500 g; and/or
m) Elmendorf Tear (MD) of at least 300 g/mm, preferably at least 325 g/mm; and/or
n) Elmendorf Tear (TD) of at least 400 g/mm, preferably at least 410 g/mm; and/or
o) Dart Drop Impact of at least 300 g, preferably at least 350 g; and/or
p) Dart Drop Impact of at least 200 g/mm, preferably at least 250 g/mm, preferably at least 300 g/mil; and/or
q) Haze of less than 15%, preferably less than 10%, preferably less than 7%, preferably less than 6%; and/or
r) Internal Haze of less than 2%, preferably less than 1.5%; and/or
s) Gauge COV of less than 12%, preferably less than 11%, preferably less than 10%, preferably less than 9%, preferably less than 8%, preferably less than 7%, preferably less than 7%, preferably less than 5%, preferably less than 4%, preferably less than 3%; and/or
t) 5 wt% or less (preferably 3 wt% or less, preferably 1 wt% or less) of xylene insoluble material.

Elmendorf Tear (MD) is determined according to ASTM D1922.

In a preferred embodiment, the films described herein, preferably the blown films have at least two of the above properties in any combination whatsoever, preferably at least three of the above properties in any combination whatsoever, preferably at least four of the above properties in any combination whatsoever, preferably at least five of the above properties in any combination whatsoever, preferably at least six of the above properties in any combination whatsoever, preferably at least seven of the above properties in any combination whatsoever, preferably at least eight of the above properties in any combination whatsoever, preferably at least nine of the above properties in any combination whatsoever, preferably at least ten of the above properties in any combination whatsoever, preferably at least eleven of the above properties in any combination whatsoever, preferably at least twelve of the above properties in any combination whatsoever, preferably at least thirteen of the above properties in any combination whatsoever, preferably at least fourteen of the above properties in any combination whatsoever, preferably at least fifteen of the above properties in any combination whatsoever, preferably at least sixteen of the above properties in any combination whatsoever, preferably at least seventeen of the above properties in any combination whatsoever, preferably at least eighteen of the above properties in any combination whatsoever, preferably at least nineteen of the above properties in any combination whatsoever, preferably all twenty of the above properties in any combination whatsoever.

In a preferred embodiment, the blown film has a total haze of 20% or less, Elmendorf Tear-MD is greater than 300g/mm, dart drop impact is greater than 170g/mm, 1% Secant modulus (MD) is greater than 180 MPa (26,000 psi), and the coefficient of variation for the film gauge is equal to or less than 7%.

In a preferred embodiment, the blown film has a total haze of 20% or less, a Gauge COV of less than 7%, and a 1% MD Secant Flexural Modulus of 170 MPa (25,000 psi) or more.

In a preferred embodiment, the blown film has a total haze of 20% or less, a Gauge COV of less than 7%, an Elmendorf Tear (MD) of 315 or moremm; and a 1% (MD) Secant Flexural Modulus of 170 MPa (25,000 psi) or more.

Molded and Extruded Products

The polyethylene composition described above may also be used to prepare molded products in any molding process including, but not limited to, injection molding, gas-assisted injection molding, extrusion blow molding, injection blow molding, injection stretch blow molding, compression molding, rotational molding, foam molding, thermoforming, sheet extrusion, and profile extrusion. The molding processes are well known to those of ordinary skill in the art.

The compositions described herein may be shaped into desirable end use articles by any suitable means known in the art. Thermoforming, vacuum forming, blow molding, rotational molding, slush molding, transfer molding, wet lay-up or contact molding, cast molding, cold forming matched-die molding, injection molding, spray techniques, profile co-extrusion, or combinations thereof are typically used methods.

Thermoforming is a process of forming at least one pliable plastic sheet into a desired shape. An embodiment of a thermoforming sequence is described; however, this should not be construed as limiting the thermoforming methods useful with the compositions of this invention. First, an extrudate film of the composition of this invention (and any other layers or materials) is placed on a shuttle rack to hold it during heating. The shuttle rack indexes into the oven which pre-heats the film before forming. Once the film is heated, the shuttle rack indexes back to the forming tool. The film is then vacuumed onto the forming tool to hold it in place and the forming tool is closed. The forming tool can be either "male" or "female" type tools. The tool stays closed to cool the film and the tool is then opened. The shaped laminate is then removed from the tool. Thermoforming is accomplished by vacuum, positive air pressure, plug-assisted vacuum forming, or combinations and variations of these, once the sheet of material reaches thermoforming temperatures, typically of from 140°C to 185°C or higher. A pre-stretched bubble step is used, especially on large parts, to improve material distribution. In one embodiment, an articulating rack lifts the heated laminate towards a male forming tool, assisted by the application of a vacuum from orifices in the male forming tool. Once the laminate is firmly formed the male forming tool, the thermoformed shaped laminate is then cooled, typically by blowers. Plug-assisted forming is generally used for small, deep drawn parts. Plug material, design, and timing can be critical to optimization of the process. Plugs made from insulating foam avoid premature quenching of the plastic. The plug shape is usually similar to the mold cavity, but smaller and without part detail. A round plug bottom will usually promote even material distribution and uniform side-wall thickness. For a semicrystalline polymer, fast plug speeds generally provide the best material distribution in the part. The shaped laminate is then cooled in the mold. Sufficient cooling to maintain a mold temperature of 30°C to 65°C is desirable. Preferably, the part is cooled below 90°C to 100°C before ejection in one embodiment. The shaped laminate is then trimmed of excess laminate material.

Blow molding is another suitable forming means, which includes injection blow molding, multi-layer blow molding, extrusion blow molding, and stretch blow molding; and is especially suitable for substantially closed or hollow objects, such as, for example, gas tanks and other fluid containers. Blow molding is described in more detail in, for example, CONCISE ENCYCLOPEDIA OF POLYMER SCIENCE AND ENGINEERING (Jacqueline I. Kroschwitz, ed., John Wiley & Sons 1990).

In yet another embodiment of the formation and shaping process, profile co-extrusion can be used. The profile co-extrusion process parameters are as above for the blow molding process, except the die temperatures (dual zone top and bottom) range from 150°C to 235°C, the feed blocks are from 90°C to 250°C, and the water cooling tank temperatures are from 10°C to 40°C.

One embodiment of an injection molding process is described as follows. The shaped laminate is placed into the injection molding tool. The mold is closed and the substrate material is injected into the mold. The substrate material has a melt temperature between 180°C and 300°C in one embodiment, from 200°C and 250°C in another embodiment, and is injected into the mold at an injection speed of between 2 and 10 seconds. After injection, the material is packed or held at a predetermined time and pressure to make the part dimensionally and aesthetically correct. Typical time periods are from 5 to 25 seconds and pressures from 1,000 kPa to 15,000 kPa. The mold is cooled between 10°C and 70°C to cool the substrate. The temperature will depend on the desired gloss and appearance desired. Typical cooling time is from 10 to 30 seconds, depending on part on the thickness. Finally, the mold is opened and the shaped composite article ejected.

Likewise, molded articles may be fabricated by injecting molten polymer blend into a mold that shapes and solidifies the molten polymer into desirable geometry and thickness of molded articles. A sheet may be made either by extruding a substantially flat profile from a die, onto a chill roll, or alternatively by calendering. Sheet will generally be considered to have a thickness of from 10 mils to 100 mils (254 $\mu$m to 2540 $\mu$m), although sheet may be substantially thicker. Tubing or pipe may be obtained by profile extrusion for uses in medical, potable water, land drainage applications, or the like. The profile extrusion process involves the extrusion of molten polymer through a die. The extruded tubing or pipe is then solidified by chill water or cooling air into a continuous extruded articles. The tubing will generally be in the range of from 0.31 cm to 2.54 cm in outside diameter and have a wall thickness of in the range of from 254 $\mu$m to 0.5 cm. The pipe will generally be in the range of from 2.54 cm to 254 cm in outside diameter and have a wall thickness of in the range of from 0.5 cm to 15 cm. Sheet made from the products of an embodiment of a version of the present invention may be used to form containers. Such containers may be formed by thermoforming, solid phase pressure forming, stamping, and other shaping techniques. Sheets may also be formed to cover floors or walls or other surfaces.

In an embodiment of the thermoforming process, the oven temperature is between 160°C and 195°C, the time in the oven between 10 and 20 seconds, and the die temperature, typically a male die, between 10°C and 71°C. The final thickness of the cooled (room temperature), shaped laminate is from 10 μm to 6000 μm in one embodiment, from 200 μm to 6000 μm in another embodiment, from 250 μm to 3000 μm in yet another embodiment, and from 500 μm to 1550 μm in yet another embodiment, a desirable range being any combination of any upper thickness limit with any lower thickness limit.

In an embodiment of the injection molding process, wherein a substrate material is injection molded into a tool including the shaped laminate, the melt temperature of the substrate material is between 190°C and 255°C in one embodiment, and between 210°C and 250°C in another embodiment; the fill time from 2 to 10 seconds in one embodiment, from 2 to 8 seconds in another embodiment; and a tool temperature of from 25°C to 65°C in one embodiment, from 27°C and 60°C in another embodiment. In a desirable embodiment, the substrate material is at a temperature that is hot enough to melt any tie-layer material or backing layer to achieve adhesion between the layers.

In yet another embodiment of the invention, the compositions of this invention may be secured to a substrate material using a blow molding operation. Blow molding is particularly useful in such applications as for making closed articles such as fuel tanks and other fluid containers, playground equipment, outdoor furniture and small enclosed structures.

It will be understood by those skilled in the art that the steps outlined above may be varied, depending upon the desired result. For example, the extruded sheet of the compositions of this invention may be directly thermoformed or blow molded without cooling, thus skipping a cooling step. Other parameters may be varied as well in order to achieve a finished composite article having desirable features.

In another embodiment, this invention relates to:

1. A polyethylene blend composition comprising one or more ethylene polymers and one or more HDPE modifiers as defined in claim 1.
2. The composition of paragraph 1, wherein the modifier has 5 wt% or less of xylene insoluble material.
4. The composition of any of paragraphs 1or 2, wherein the polyethylene comprises a copolymer of ethylene, one or more $C_3$ to $C_{20}$ alphaolefins, and has an Mw of 20,000 to 1,000,000 g/mol.
5. The composition of any of paragraphs 1 to 4, wherein the polyethylene has a density of 0.91 to 0.96 g/cm$^3$.
7. A polyethylene film comprising the blend of any of paragraphs 1 to 5, said film having a gauge variation that is at least 10% lower than that of film of the same thickness and of the same composition, absent the modifier, prepared under the same conditions and a dart impact strength that is within 20% of a film of the same thickness and of the same composition, absent the modifier, prepared under the same conditions.
8. A polyethylene film comprising the blend of any of paragraphs 1 to 6, said film having a gauge variation that is at least 10% lower than that of film of the same thickness and of the same composition, absent the modifier, prepared under the same conditions and a MD Tear strength that is within 20% of a film of the same thickness and of the same composition, absent the modifier, prepared under the same conditions.
9. A polyethylene film comprising the blend of any of paragraphs 1 to 6, said film having a haze that is at least 10% lower than that of film of the same thickness and of the same composition, absent the modifier, prepared under the same conditions and a dart impact strength that is within 20% of a film of the same thickness and of the same composition, absent the modifier, prepared under the same conditions.
10. A polyethylene film comprising the blend of paragraph 1, said film having a haze that is at least 10% lower than that of film of the same thickness and of the same composition, absent the modifier, prepared under the same conditions and a MD Tear strength that is within 20% of a film of the same thickness and of the same composition, absent the modifier, prepared under the same conditions.
11. A film comprising the composition of any of paragraphs 1 to 10, said film having a haze of 20% or less.
12. A film comprising the composition of any of paragraphs 1 to 11, wherein the film has a haze that is at least 15% less than the haze measured on a film of the same thickness and of the same composition, absent the HDPE modifier, prepared under the same conditions.
13. A film comprising the composition of any of paragraphs 1 to 12, wherein the film has a gauge variation that is at least 10% less than the gauge variation measured on a film of the same thickness and of the same composition, absent the HDPE modifier, prepared under the same conditions.
14. A film comprising the composition of any of paragraphs 1 to 13, wherein the film has a dart impact strength that is greater than or within 30% less than the dart impact strength measured on a film of the same thickness and of the same composition, absent the HDPE modifier, prepared under the same conditions.
15. A film comprising the composition of any of paragraphs 1 to 14, wherein the film has an MD Tear strength that is greater than or within 30% less than the MD Tear strength measured on a film of the same thickness and of the same composition, absent the HDPE modifier, prepared under the same conditions.

16. A film comprising the blend of any of paragraphs 1 to 15, wherein the film has a gauge variation that is at least 10% less than the gauge variation measured on a film of the same thickness and of the same composition, absent the HDPE modifier, prepared under the same conditions, and the film has a Dart Drop, in g/mil, that within 30% of the Dart Drop measured on a film of the same thickness and of the same composition, absent the HDPE modifier, prepared under the same conditions.

17. A film comprising the blend of any of paragraphs 1 to 16, wherein the film has a gauge variation that is at least 10% less than the gauge variation measured on a film of the same thickness and of the same composition, absent the HDPE modifier, prepared under the same conditions, and the film has an MD Tear strength that is greater than or within 30% less than the MD Tear strength measured on a film of the same thickness and of the same composition, absent the HDPE modifier, prepared under the same conditions.

18. A film comprising the blend of any of paragraphs 1 to 17, wherein the blend composition has a strain hardening ratio that is at least 10% greater than the strain hardening ratio measured on a composition, absent the HDPE modifier, and the film has a Dart Drop, in g/mil, that within 30% of the Dart Drop measured on a film of the same thickness and of the same composition, absent the HDPE modifier, prepared under the same conditions.

19. A film comprising the blend of any of paragraphs 1 to 18, wherein the film has a gauge variation that is at least 10% less than the gauge variation measured on a film of the same thickness and of the same composition, absent the HDPE modifier, prepared under the same conditions, and the film has a haze that is at least 10% less than haze measured on a film of the same thickness and of the same composition, absent the HDPE modifier, prepared under the same conditions.

20. The composition of any of paragraphs 1 to 19 comprising more than 25 wt% (based on the weight of the composition) of one or more ethylene polymers having a $g'_{vis}$ of 0.95 or more and an $M_w$ of 20,000 g/mol or more and at least 0.1 wt% of a HDPE modifier, wherein the ethylene polymer has a $g'_{vis}$ of at least 0.25 units higher than the $g'_{vis}$ of the branched modifier.

In another embodiment this invention relates to:

1A. A polyethylene blend composition comprising one or more ethylene polymers and one or more HDPE modifiers as defined in claim 1.

2A. The composition of paragraph 1A, wherein the modifier has 5 wt% or less of xylene insoluble material.

3A. The composition of paragraph 1A or 2A, wherein the blend is formed into a film and the film has a total haze of 20% or less, Elmendorf Tear-MD is greater than 300g/mm, dart drop impact is greater than 170 g/mm, 1% Secant modulus (MD) is greater than 180 MPa (26,000 psi) and the coefficient of variation for the film gauge is less than 7%.

4A. The composition of any of paragraphs 1A to 3A, wherein the polyethylene comprises a copolymer of ethylene and one or more $C_3$ to $C_{20}$ alphaolefins and has an $M_w$ of 20,000 to 1,000,000 g/mol.

5A. The composition of any of paragraphs 1A to 4A, wherein the polyethylene has a density of 0.91 to 0.96 g/cm$^3$.

6A. The composition of any of paragraphs 3A to 5A, wherein the film has a total haze of 20% or less, a Gauge COV of less than 7%, and a 1% MD Secant Flexural Modulus of 170 MPa (25,000 psi) or more.

7A. The composition of any of paragraphs 1A to 6A, comprising more than 25 wt% (based on the weight of the composition) of one or more ethylene polymers having a $g'_{vis}$ of 0.95 or more and an $M_w$ of 20,000 g/mol or more and at least 0.1 wt% of the modifier, wherein the ethylene polymer has a $g'_{vis}$ of at least 0.25 units higher than the $g'_{vis}$ of the modifier.

8A. The composition of any of paragraphs 1A to 7A, wherein the blend is formed into a film and the film has a total haze of 20% or less, a Gauge COV of less than 7%, an Elmendorf Tear (MD) of 315 or more g/mm; and a 1% (MD) Secant Flexural Modulus of 170 MPa (25,000 psi) or more.

## Test Methods

Melt Index (MI, also referred to as 12) is measured according to ASTM D1238 at 190°C, under a load of 2.16 kg unless otherwise noted. The units for MI are g/10 min or dg/min.

High Load Melt Index (HLMI, also referred to as 121) is the melt flow rate measured according to ASTM D-1238 at 190°C, under a load of 21.6 kg. The units for HLMI are g/10 min or dg/min.

Melt Index Ratio (MIR) is the ratio of the high load melt index to the melt index, or 121/12.

Density is measured by density-gradient column, as described in ASTM D1505, on a compression-molded specimen that has been slowly cooled to room temperature (i.e., over a period of 10 minutes or more) and allowed to age for a sufficient time that the density is constant within +/- 0.001 g/cm$^3$. The units for density are g/cm$^3$.

Gauge, reported in mils, was measured using a Measuretech Series 200 instrument. The instrument measures film thickness using a capacitance gauge. For each film sample, ten film thickness data points were measured per inch of film as the film was passed through the gauge in a transverse direction. From these measurements, an average gauge measurement was determined and reported. Coefficient of variation (Gauge COV) is used to measure the variation of film thickness in the transverse direction. The Gauge COV is defined as a ratio of the standard deviation to the mean of film thickness.

Elmendorf Tear, reported in grams (g) or grams per mm (g/mm), was determined according to ASTM D-1922.

Tensile Strength at Yield, Tensile Strength at Break, Ultimate Tensile Strength, Tensile Strength, and Tensile Strength at 50%, 100%, and/or 200% elongation are measured as specified by ASTM D-882.

Tensile Peak Load is measured as specified by ASTM D-882.

Tensile Energyis measured as specified by ASTM D-882.

Elongation at Yield and Elongation at Break, reported as a percentage (%), are measured as specified by ASTM D-882.

1% Secant Modulus (M), reported in pounds per square inch ($lb/in^2$ or psi), was measured as specified by ASTM D-882-10.

Haze, reported as a percentage (%), was measured as specified by ASTM D-1003. Internal Haze, reported as a percentage (%), is the haze excluding any film surface contribution. The film surfaces are coated with ASTM approved inert liquids to eliminate any haze contribution from the film surface topology. The internal haze measurement procedure is per ASTM D 1003.

Dart Drop Impact or Dart Drop Impact Strength (DIS), reported in grams (g) and/or grams per mil (g/mil), was measured as specified by ASTM D-1709, method A, unless otherwise specified.

"Melt strength" is defined as the force required to draw a molten polymer extrudate at a rate of $12mm/s^2$ and at an extrusion temperature of 190°C until breakage of the extrudate whereby the force is applied by take up rollers. The polymer is extruded at a velocity of 0.33 mm/s through an annular die of 2 mm diameter and 30 mm length. Melt strength values reported herein are determined using a Gottfert Rheotens tester and are reported in centi-Newtons (cN). Additional experimental parameters for determining the melt strength are listed in Table 1. For the measurements of melt strength, the resins were stabilized with 500 ppm of Irganox 1076 and 1500 ppm of Irgafosl68.

| Table 1: Melt Strength test parameters | |
|---|---|
| Acceleration | $12\ mm/s^2$ |
| Temperature | 190°C |
| Piston diameter | 12 mm |
| Piston speed | 0.178 mm/s |
| Die diameter | 2 mm |
| Die length | 30 mm |
| Shear rate at the die | $40.05\ s^{-1}$ |
| Strand length | 100.0 mm |
| Vo (velocity at die exit) | 10.0 mm/s |

Dynamic shear melt rheological data was measured with an Advanced Rheometrics Expansion System (ARES) using parallel plates (diameter = 25 mm) in a dynamic mode under nitrogen atmosphere. For all experiments, the rheometer was thermally stable at 190°C for at least 30 minutes before inserting compression-molded sample of resin onto the parallel plates. To determine the samples viscoelastic behavior, frequency sweeps in the range from 0.01 to 385 rad/s were carried out at 190°C under constant strain. Depending on the molecular weight and temperature, strains of 10% and 15% were used and linearity of the response was verified. A nitrogen stream was circulated through the sample oven to minimize chain extension or cross-linking during the experiments. All the samples were compression molded at 190°C and no stabilizers were added. A sinusoidal shear strain is applied to the material if the strain amplitude is sufficiently small the material behaves linearly. It can be shown that the resulting steady-state stress will also oscillate sinusoidally at the same frequency, but will be shifted by a phase angle $\delta$ with respect to the strain wave. The stress leads the strain by $\delta$. For purely elastic materials $\delta$=0° (stress is in phase with strain) and for purely viscous materials $\delta$=90° (stress leads the strain by 90° although the stress is in phase with the strain rate). For viscoelastic materials, $0 < \delta < 90$. The shear thinning slope (STS) was measured using plots of the logarithm (base ten) of the dynamic viscosity versus logarithm (base ten) of the frequency. The slope is the difference in the log(dynamic viscosity) at a frequency of $100\ s^{-1}$ and the log(dynamic viscosity) at a frequency of $0.01\ s^{-1}$ divided by 4.

The complex shear viscosity ($\eta$*) versus frequency ($\omega$) curves were fitted using the Cross model (see, for example, C.W. Macosco, RHEOLOGY: PRINCIPLES, MEASUREMENTS, AND APPLICATIONS, Wiley-VCH, 1994):

$$\eta^* = \frac{\eta_0}{1+(\lambda\omega)^{1-n}}$$

The three parameters in this model are: $\eta_0$, the zero-shear viscosity; $\lambda$, the average relaxation time; and *n,* the power-law exponent. The zero-shear viscosity is the value at a plateau in the Newtonian region of the flow curve at a low frequency, where the dynamic viscosity is independent of frequency. The average relaxation time corresponds to the inverse of the frequency at which shear-thinning starts. The power-law exponent describes the extent of shear-thinning, in that the magnitude of the slope of the flow curve at high frequencies approaches 1-n on a log($\eta^*$)-log($\omega$) plot. For Newtonian fluids, $n$ =1 and the dynamic complex viscosity is independent of frequency. For the polymers of interest here, $n$ < 1, so that enhanced shear-thinning behavior is indicated by a decrease in n (increase in *1-n*).

The transient uniaxial extensional viscosity was measured using a SER-2-A Testing Platform available from Xpansion Instruments LLC, Tallmadge, OH, USA. The SER Testing Platform was used on a Rheometrics ARES-LS (RSA3) strain-controlled rotational rheometer available from TA Instruments Inc., New Castle, DE, USA. The SER Testing Platform is described in U.S. Patent Nos. 6,578,413 and 6,691,569. A general description of transient uniaxial extensional viscosity measurements is provided, for example, in "Strain hardening of various polyolefins in uniaxial elongational flow," The Society of Rheology, Inc., J. Rheol. 47(3), 619-630 (2003); and "Measuring the transient extensional rheology of polyethylene melts using the SER universal testing platform," The Society of Rheology, Inc., J. Rheol. 49(3), 585-606 (2005). Strain hardening occurs when a polymer is subjected to uniaxial extension and the transient extensional viscosity increases more than what is predicted from linear viscoelastic theory. Strain hardening is observed as abrupt upswing of the extensional viscosity in the transient extensional viscosity vs. time plot. A strain hardening ratio (SHR) is used to characterize the upswing in extensional viscosity and is defined as the ratio of the maximum transient extensional viscosity over three times the value of the transient zero-shear-rate viscosity at the same strain. Strain hardening is present in the material when the ratio is greater than 1.

Comonomer content (such as for butene, hexene and octene) was determined via FTIR measurements according to ASTM D3900 (calibrated versus $^{13}C$ NMR). A thin homogeneous film of polymer, pressed at a temperature of 150°C, was mounted on a Perkin Elmer Spectrum 2000 infrared spectrophotometer. The weight percent of copolymer is determined via measurement of the methyl deformation band at ~1375 cm-1. The peak height of this band is normalized by the combination and overtone band at ~4321 cm-1, which corrects for path length differences.

Peak melting point, Tm, (also referred to as melting point), peak crystallization temperature, Tc, (also referred to as crystallization temperature), glass transition temperature (Tg), heat of fusion ($\Delta$Hf or Hf), and percent crystallinity were determined using the following DSC procedure according to ASTM D3418-03. Differential scanning calorimetric (DSC) data were obtained using a TA Instruments model Q200 machine. Samples weighing approximately 5 mg to 10 mg were sealed in an aluminum hermetic sample pan. The DSC data were recorded by first gradually heating the sample to 200°C at a rate of 10°C/minute. The sample was kept at 200°C for 2 minutes, then cooled to -90°C at a rate of 10°C/minute, followed by an isothermal for 2 minutes and heating to 200°C at 10°C/minute. Both the first and second cycle thermal events were recorded. Areas under the endothermic peaks were measured and used to determine the heat of fusion and the percent of crystallinity. The percent crystallinity is calculated using the formula, [area under the melting peak (Joules/gram) / B (Joules/gram)] * 100, where B is the heat of fusion for the 100% crystalline homopolymer of the major monomer component. These values for B are to be obtained from the Polymer Handbook, Fourth Edition, published by John Wiley and Sons, New York 1999, provided however, that a value of 189 J/g (B) is used as the heat of fusion for 100% crystalline polypropylene, a value of 290 J/g is used for the heat of fusion for 100% crystalline polyethylene. The melting and crystallization temperatures reported here were obtained during the second heating/cooling cycle unless otherwise noted.

For polymers displaying multiple endothermic and exothermic peaks, all the peak crystallization temperatures and peak melting temperatures were reported. The heat of fusion for each endothermic peak was calculated individually. The percent crystallinity is calculated using the sum of heat of fusions from all endothermic peaks. Some of polymer blends produced show a secondary melting/cooling peak overlapping with the principal peak, which peaks are considered together as a single melting/cooling peak. The highest of these peaks is considered the peak melting temperature/crystallization point. For the amorphous polymers, having comparatively low levels of crystallinity, the melting temperature is typically measured and reported during the first heating cycle. Prior to the DSC measurement, the sample was aged (typically by holding it at ambient temperature for a period of 2 days) or annealed to maximize the level of crystallinity.

Unless otherwise stated, polymer molecular weight (weight-average molecular weight, Mw, number-average molecular weight, Mn, and Z-averaged molecular weight, Mz) and molecular weight distribution ($M_w/M_n$) are determined using Size-Exclusion Chromatography. Equipment consists of a High Temperature Size Exclusion Chromatograph (either from Waters Corporation or Polymer Laboratories), with a differential refractive index detector (DRI), an online light scattering detector, and a viscometer. Three Polymer Laboratories PLgel 10mm Mixed-B columns are used. The nominal flow rate is 0.5 $cm^3$/min and the nominal injection volume is 300 $\mu$L. The various transfer lines, columns and differential refractometer (the DRI detector) are contained in an oven maintained at 135°C. Solvent for the SEC experiment is prepared by dissolving 6 grams of butylated hydroxy toluene as an antioxidant in 4 liters of reagent grade 1,2,4 trichlorobenzene (TCB). The TCB mixture is then filtered through a 0.7 $\mu$m glass pre-filter and subsequently through a 0.1 $\mu$m Teflon filter. The TCB is then degassed with an online degasser before entering the SEC.

Polymer solutions are prepared by placing dry polymer in a glass container, adding the desired amount of TCB, then heating the mixture at 160°C with continuous agitation for 2 hours. All quantities are measured gravimetrically. The TCB densities used to express the polymer concentration in mass/volume units are 1.463 g/ml at room temperature and 1.324 g/ml at 135°C. The injection concentration can range from 1.0 to 2.0 mg/ml, with lower concentrations being used for higher molecular weight samples.

Prior to running each sample the DRI detector and the injector are purged. Flow rate in the apparatus is then increased to 0.5 ml/minute and the DRI is allowed to stabilize for 8 to 9 hours before injecting the first sample. The LS laser is turned on 1 to 1.5 hours before running samples.

The concentration, c, at each point in the chromatogram is calculated from the DRI signal after subtracting the prevailing baseline, $I_{DRI}$, using the following equation:

$$c = K_{DRI} I_{DRI}/(dn/dc)$$

where $K_{DRI}$ is a constant determined by calibrating the DRI, and (dn/dc) is the same as described below for the LS analysis. The processes of subtracting the prevailing baseline (i.e., background signal) and setting integration limits that define the starting and ending points of the chromatogram are well known to those familiar with SEC analysis. Units on parameters throughout this description of the SEC method are such that concentration is expressed in g/$cm^3$, molecular weight is expressed in g/mole, and intrinsic viscosity is expressed in dL/g.

The light scattering detector is a Wyatt Technology High Temperature mini-DAWN. The polymer molecular weight, M, at each point in the chromatogram is determined by analyzing the LS output using the Zimm model for static light scattering (M.B. Huglin, LIGHT SCATTERING FROM POLYMER SOLUTIONS, Academic Press, 1971):

$$\frac{K_o c}{\Delta R(\theta)} = \frac{1}{MP(\theta)} + 2A_2 c .$$

Here, $\Delta R(\theta)$ is the measured excess Rayleigh scattering intensity at scattering angle $\theta$, c is the polymer concentration determined from the DRI analysis, $A_2$ is the second virial coefficient, $P(\theta)$ is the form factor for a monodisperse random coil (described in the above reference), and $K_o$ is the optical constant for the system:

$$K_o = \frac{4\pi^2 n^2 (dn/dc)^2}{\lambda^4 N_A}$$

in which $N_A$ is Avogadro's number, and (dn/dc) is the refractive index increment for the system. The refractive index, n = 1.500 for TCB at 135°C and $\lambda$ = 690 nm. In addition, $A_2$ = 0.0015 and (dn/dc) = 0.104 for polyethylene in TCB at 135°C; both parameters may vary with average composition of an ethylene copolymer. Thus, the molecular weight determined by LS analysis is calculated by solving the above equations for each point in the chromatogram; together these allow for calculation of the average molecular weight and molecular weight distribution by LS analysis.

A high temperature Viscotek Corporation viscometer is used, which has four capillaries arranged in a Wheatstone bridge configuration with two pressure transducers. One transducer measures the total pressure drop across the detector, and the other, positioned between the two sides of the bridge, measures a differential pressure. The specific viscosity for the solution flowing through the viscometer at each point in the chromatogram, $(\eta_s)_i$, is calculated from the ratio of their outputs. The intrinsic viscosity at each point in the chromatogram, $[\eta]_i$, is calculated by solving the following equation (for the positive root) at each point i:

$$(\eta_s)_i = c_i[\eta]_i + 0.3(c_i[\eta]_i)^2$$

where $c_i$ is the concentration at point i as determined from the DRI analysis.

The branching index ($g'_{vis}$) is calculated using the output of the SEC-DRI-LS-VIS method (described above) as follows. The average intrinsic viscosity, $[\eta]_{avg}$, of the sample is calculated by:

$$[\eta]_{avg} = \frac{\sum c_i [\eta]_i}{\sum c_i}$$

where the summations are over the chromatographic slices, i, between the integration limits. The branching index g' is defined as:

$$g'_{vis} = \frac{[\eta]_{avg}}{kM_v^{\alpha}}$$

where the Mark-Houwink parameters k and $\alpha$ are given by k=0.00592, a= 0.463. The hydrogenated polybutadiene based modifier can be represented as a butane copolymer for these calculations with 12% butene. $M_v$ is the viscosity-average molecular weight based on molecular weights determined by LS analysis.

Experimental and analysis details not described above, including how the detectors are calibrated and how to calculate the composition dependence of Mark-Houwink parameters and the second-virial coefficient, are described by T. Sun, P. Brant, R. R. Chance, and W. W. Graessley (Macromolecules, 2001, Vol. 34(19), pp. 6812-6820).

Proton NMR spectra were collected using a 500 MHz Varian pulsed fourier transform NMR spectrometer equipped with a variable temperature proton detection probe operating at 120°C. The polymer sample is dissolved in 1,1,2,2-tetrachloroethane-d2 (TCE-d2) and transferred into a 5 mm glass NMR tube. Typical acquisition parameters are sweep width = 10 KHz, pulse width = 30 degrees, acquisition time = 2 s, acquisition delay= 5 s and number of scans = 120. Chemical shifts are determined relative to the TCE-d2 signal which is set to 5.98 ppm.

In conducting the $^{13}C$ NMR investigations, samples are prepared by adding 0.3 g sample to approximately 3 g of tetrachloroethane-d2 in a 10 mm NMR tube. The samples are dissolved and homogenized by heating the tube and its contents to 150°C. The data are collected using a Varian spectrometer, with corresponding $^{1}H$ frequencies of either 400 or 700 MHz (in event of conflict, 700 MHz shall be used). The data are acquired using nominally 4000 transients per data file with a a 10 second pulse repetition delay. To achieve maximum signal-to-noise for quantitative analysis, multiple data files may be added together. The spectral width was adjusted to include all the NMR resonances of interest and FIDs were collected containing a minimum of 32K data points. The samples are analyzed at 120°C in a 10 mm broad band probe.

Where applicable, the properties and descriptions below are intended to encompass measurements in both the machine and transverse directions. Such measurements are reported separately, with the designation "MD" indicating a measurement in the machine direction, and "TD" indicating a measurement in the transverse direction.

## REFERENCE EXAMPLES

All reactions in the following reference examples were performed using as-received starting materials without any purification.

### Polyethylene Blends

Prior to blowing film, the HDPE modifier and matrix polyethylene were compounded in a 1" Haake twin screw extruder. The Haake twin screw extruder was set at 50 rpm and the melt temperature was targeted at 190°C. The blown film experiments were conducted on a Haake blown film line containing a 25 mm (1 inch) single screw extruder and a 25 mm (1 inch) mono-layer blown film die. The single screw has a Maddock mixing session. The pure resin or the blends were fed into the 25mm (1 inch) single screw extruder to be melted and homogenized. The molten polymer was pressurized and fed into a 25 mm (1") tubular die. The annular die forms an annular shape with the molten polymer melt with even flow distribution around its circumference. Upon exiting the die lip, two streams of air were introduced to blow the polymer melt into a tubular form, commonly called a bubble, and subsequently to cool the thin film. One stream of air was introduced in the center of the die to inflate the bubble to a certain diameter, or blowup ratio (BUR). The BUR is defined as:

$$BUR = 2 \times L / (\pi \times D)$$

where D is the die diameter and L is the film bubble layflat width.

For all the experiments, the BUR is the same and is set at 2.8. The film gauge is 1.5 mm. (The film had a line speed of 45%, a lay flat of 11.2 cm (4.4 inches), an extruder speed of 33 rpm, and extrusion temperatures in zones 1, 2, 3 and 5(die) were 190°C, 200°C, 195°C, 190°C, respectively.)

The tube or bubble collapsed after reaching the two up-nip rollers. The nip rollers are driven by a motor with varied speeds. The film was solidified prior to reaching the up-nip rollers. The film was collected after passing through the up-nip rollers. The thickness of the film is controlled by speed of the nip rollers.

A comparative blend/film of Exceed™2018 PE combined with 5 wt% LDPE (ExxonMobil Chemical Company, Houston, Texas LD071.LR™ PE, 0.924 g/cc, 0.70 dg/min, 190°C, 2.16 kg) and 0.1 wt% BHT was also prepared under the conditions described above (referred to as Blend D), except that the extruder temperatures were 190°C, 195°C, 190°C, and 185°C, respectively. The blend compositions and film properties are listed in Table 2.

Table 2

| | Blend A | Blend B | Blend C | Blend D* |
|---|---|---|---|---|
| Exceed™ LLDPE 2018 | 99.9 wt% | 96.9 wt% | 94.9 wt% | 94.9 wt% |
| Modifier | 0 wt% | 3 wt% AL55-003 | 5 wt% AL55-003 | LDPE 5 wt% |
| BHT(butylated hydroxy toluene) | 0.1 wt% | 0.1 wt% | 0.1 wt% | 0.1 wt% |
| 1% Secant Flexural Modulus (MD) MPa (psi) | 189.20 (27441) | 183.35 (26593) | 207.22 (30127) | 199.53 (28940) |
| Elmendorf Tear (MD) (g/mm) | 344 | 318 | 332 | 259 |
| Dart Drop (g/mm) | 175 | 284 | 179 | 230 |
| Haze (%) | 47.6 | 14 | 12 | 16.7 |
| Gauge COV (%) | 7.8 | 6.9 | 5.0 | 7.1 |
| PAXON™ AL55-003 is a high density polyethylene having a density of 0.954 g/cc, an Mw/Mn of 6.8; an melt index (190°C/2.16 kg) of 0.3 dg/min and a g'of 1 | | | | |

## Claims

1. A polyethylene blend composition comprising one or more ethylene polymers and one or more HDPE modifiers, wherein
the HDPE modifier is present at from 0.25 wt% to 10 wt% based upon the weight of the blend;
the HDPE modifier has: 1) a density of greater than 0.94 g/cc; 2) a Mw/Mn greater than 5; 3) a melt index (ASTM 1238, 190°C, 2.16 kg) of less than 0.7 dg/min; and 4) a $g'_{vis}$ of 0.96 or less;
the one or more ethylene polymers have a $g'_{vis}$ of 0.95 or more, a composition distribution breadth index (CDBI) of 60% or more and a density of 0.90 g/cc or more; and
the ethylene polymer has a $g'_{vis}$ of at least 0.01 units higher than the $g'_{vis}$ of the HDPE modifier.

2. The composition of claim 1, wherein the modifier has 5 wt% or less of xylene insoluble material.

3. The composition of claims 1 or 2, wherein the blend is formed into a film and the film has a total haze of 20% or less, Elmendorf Tear-MD is greater than 300 grams/25.4 µm (g/mil), dart drop impact is greater than 170 grams/25.4 µm (g/mil), 1% Secant modulus(MD) is greater than 180 MPa (26,000 psi) and the coefficient of variation for the film gauge is less than 7%.

4. The composition of any one of the preceding claims, wherein the modifier is present at 0.5 wt% to 8 wt%, based upon the weight of the blend.

5. The composition of any one of the preceding claims, wherein the polyethylene comprises a copolymer of ethylene and one or more $C_3$ to $C_{20}$ alphaolefins and has an $M_w$ of 20,000 to 1,000,000 g/mol.

6. The composition of any one of the preceding claims, wherein the polyethylene has a density of 0.91 to 0.96 g/cm$^3$.

7. The composition of any one of the preceding claims, wherein the modifier is present at from 0.1 wt% to 5 wt% (based upon the weight of the blend); and the polyethylene has a composition distribution breadth index of 60% or more and a density of 0.90 g/cc or more.

8. The composition of any one of the preceding claims, wherein the blend is formed into a film and the film has a total haze of 20% or less, a Gauge COV of less than 7%, and a 1% MD Secant Flexural Modulus of 170 MPa (25,000 psi) or more.

9. A polyethylene film comprising the composition of any one of claims 1-8, said film having a gauge variation that is at least 10% lower than that of film of the same thickness and of the same composition, absent the modifier, prepared under the same conditions and a dart impact strength that is within 20% of a film of the same thickness and of the same composition, absent the modifier, prepared under the same conditions.

10. A polyethylene film comprising the composition of any one of claims 1-8, said film having a gauge variation that is at least 10% lower than that of film of the same thickness and of the same composition, absent the modifier, prepared under the same conditions and an MD Tear strength that is within 20% of a film of the same thickness and of the same composition, absent the modifier, prepared under the same conditions.

11. A polyethylene film comprising the composition of any one of claims 1-8, said film having a haze that is at least 10% lower than that of film of the same thickness and of the same composition, absent the modifier, prepared under the same conditions and a dart impact strength that is within 20% of a film of the same thickness and of the same composition, absent the modifier, prepared under the same conditions.

12. A polyethylene film comprising the composition of any one of claims 1-8, said film having a haze that is at least 10% lower than that of film of the same thickness and of the same composition, absent the modifier, prepared under the same conditions and an MD Tear strength that is within 20% of a film of the same thickness and of the same composition, absent the modifier, prepared under the same conditions.

13. A polyethylene film comprising the composition of any one of claims 1-8, said film having a haze of 20% or less.

14. A polyethylene film comprising the composition of any one of claims 1-8, wherein the film has a haze that is at least 15% less than the haze measured on a film of the same thickness and of the same composition, absent the modifier, prepared under the same conditions.

15. A polyethylene film comprising the composition of any one of claims 1-8, wherein the film has a gauge variation that is at least 10% less than the gauge variation measured on a film of the same thickness and of the same composition, absent the modifier, prepared under the same conditions.

## Patentansprüche

1. Polyethylenmischungs-Zusammensetzung, umfassend ein oder mehrere Ethylenpolymere und ein oder mehrere HDPE-Modifizierungsmittel, wobei
das HDPE-Modifizierungsmittel in einer Menge von 0,25 Gew.-% bis 10 Gew.-% vorhanden ist, bezogen auf das Gewicht der Mischung;
das HDPE-Modifizierungsmittel aufweist: 1) eine Dichte von mehr als 0,94 g/cm$^3$; 2) ein $M_w/M_n$ von mehr als 5; 3) einen Schmelzindex (ASTM 1238, 190°C, 2,16 kg) von weniger als 0,7 dg/min; und 4) ein $g'_{vis}$ von 0,96 oder weniger;
das ein oder mehrere Ethylenpolymer einen $g'_{vis}$ von 0,95 oder mehr, einen Zusammensetzungsverteilungs-Index (CDBI) von 60% oder mehr und eine Dichte von 0,90 g/cm$^3$ oder mehr aufweist; und
das Ethylenpolymer einen um mindestens 0,01 Einheiten höheren $g'_{vis}$ aufweist als das HDPE-Modifizierungsmittel.

2. Zusammensetzung nach Anspruch 1, wobei das Modifizierungsmittel 5 Gew.-% oder weniger in Xylol unlösliches Material aufweist.

3. Zusammensetzung nach Anspruch 1 oder 2, wobei die Mischung zu einer Folie geformt ist und die Folie eine Gesamttrübung von 20% oder weniger, eine Elmendorf Reißfestigkeit (MD) von größer als 300 g/25,4 μm, eine Schlagfestigkeit nach dem Fallhammerverfahren von größer als 170 g/25,4 μm (g/mil), ein 1%-Sekanten-Schermodul (MD) von größer als 180 MPa (26.000 psi) und einen Variationskoeffizient für die Foliendicke von weniger als 7% aufweist.

4. Zusammensetzung nach einem der vorhergehenden Ansprüche, wobei das Modifizierungsmittel in einer Menge von 0,5 Gew.-% bis 8 Gew.-% vorhanden ist, bezogen auf das Gewicht der Mischung.

5. Zusammensetzung nach einem der vorhergehenden Ansprüche, wobei das Polyethylen ein Copolymer aus Ethylen und einem oder mehreren $C_3$- bis $C_{20}$-Alphaolefinen umfasst und ein $M_w$ von 20.000 bis 1.000.000 g/mol aufweist.

6. Zusammensetzung nach einem der vorhergehenden Ansprüche, wobei das Polyethylen eine Dichte von 0,91 bis 0,96 g/cm$^3$ aufweist.

7. Zusammensetzung nach einem der vorhergehenden Ansprüche, wobei das Modifizierungsmittel in einer Menge von 0,1 Gew.-% bis 5 Gew.-% (bezogen auf das Gewicht der Mischung) vorhanden ist und das Polyethylen einen Zusammensetzungsverteilungs-Index (CDBI) von 60% oder mehr und eine Dichte von mehr als 0,90 g/cm$^3$ aufweist.

8. Zusammensetzung nach einem der vorhergehenden Ansprüche, wobei die Mischung zu einer Folie geformt ist und die Folie eine Gesamttrübung von 20% oder weniger, einen Variationskoeffizient für die Foliendicke von weniger als 7% und einen 1%-Sekant-Biegemodul (MD) von 170 MPa (25.000 Psi) oder mehr aufweist.

9. Polyethylenfolie, die eine Zusammensetzung gemäß einem der Ansprüche 1 bis 8 umfasst, wobei die Folie eine Variation der Foliendicke, die mindestens 10% niedriger ist als diejenige einer Folie mit gleicher Dicke und gleicher Zusammensetzung ohne das Modifizierungsmittel, die unter den gleichen Bedingungen hergestellt wurde, und eine Schlagfestigkeit nach dem Fallhammerverfahren aufweist, die im Bereich von 20% einer Folie mit gleicher Dicke und gleicher Zusammensetzung ohne das Modifizierungsmittel liegt, die unter gleichen Bedingungen hergestellt wurde.

10. Polyethylenfolie, die eine Zusammensetzung gemäß einem der Ansprüche 1 bis 8 umfasst, wobei die Folie eine Variation der Foliendicke aufweist, die mindestens 10% niedriger ist als diejenige einer Folie mit gleicher Dicke und gleicher Zusammensetzung ohne das Modifizierungsmittel, die unter den gleichen Bedingungen hergestellt wurde, und einer MD-Reißfestigkeit, die im Bereich von 20% einer Folie mit gleicher Dicke und gleicher Zusammensetzung ohne das Modifizierungsmittel liegt, die unter gleichen Bedingungen hergestellt wurde.

11. Polyethylenfolie, die eine Zusammensetzung gemäß einem der Ansprüche 1 bis 8 umfasst, wobei die Folie eine Trübung aufweist, die mindestens 10% niedriger ist als diejenige einer Folie mit gleicher Dicke und gleicher Zusammensetzung ohne das Modifizierungsmittel, die unter den gleichen Bedingungen hergestellt wurde, und eine Schlagfestigkeit nach dem Fallhammerverfahren, die im Bereich von 20% einer Folie mit gleicher Dicke und gleicher Zusammensetzung ohne das Modifizierungsmittel liegt, die unter gleichen Bedingungen hergestellt wurde.

12. Polyethylenfolie, die eine Zusammensetzung gemäß einem der Ansprüche 1 bis 8 umfasst, wobei die Folie eine Trübung aufweist, die mindestens 10% niedriger ist als diejenige einer Folie mit gleicher Dicke und gleicher Zusammensetzung ohne das Modifizierungsmittel, die unter den gleichen Bedingungen hergestellt wurde, und eine MD-Reißfestigkeit, die im Bereich von 20% einer Folie mit gleicher Dicke und gleicher Zusammensetzung ohne das Modifizierungsmittel liegt, die unter gleichen Bedingungen hergestellt wurde.

13. Polyethylenfolie, umfassend die Zusammensetzung gemäß einem der Ansprüche 1 bis 8, wobei die Folie eine Trübung von 20% oder weniger aufweist.

14. Polyethylenfolie, umfassend die Zusammensetzung gemäß einem der Ansprüche 1 bis 8, wobei die Folie eine Trübung aufweist, die mindestens 15% geringer ist als die Trübung einer Folie der gleichen Dicke und der gleichen Zusammensetzung ohne das Modifizierungsmittel, die unter den gleichen Bedingungen hergestellt wurde.

15. Polyethylenfolie, umfassend die Zusammensetzung gemäß einem der Ansprüche 1 bis 8, wobei die Folie eine Variation der Foliendicke aufweist, die mindestens 10% geringer ist als die Variation der Foliendicke einer Folie der gleichen Dicke und der gleichen Zusammensetzung ohne das Modifizierungsmittel, die unter den gleichen Bedingungen hergestellt wurde.

## Revendications

1. Composition de mélange de polyéthylène comprenant un ou plusieurs polymère(s) d'éthylène et un ou plusieurs agent(s) modifiant(s) de type PEHD (polyéthylène haute densité),

    l'agent modifiant de type PEHD étant présent en une quantité de 0,25% en poids jusqu'à 10% en poids sur la base du poids du mélange ;
    l'agent modifiant de type PEHD ayant : 1) une densité supérieure à 0,94 g/cm$^3$; 2) une valeur Mw/Mn (Mw = poids moléculaire moyen en poids, Mn = poids moléculaire moyen en nombre) supérieure à 5 ; 3) un indice de fluidité (ASTM 1238, 190°C, 2,16 kg) inférieur à 0,7 dg/min ; et 4) une valeur $g'_{vis}$ inférieure ou égale à 0,96 ;
    le ou les polymère(s) d'éthylène ayant une valeur $g'_{vis}$ supérieure ou égale à 0,95, un indice de largeur de distribution de composition (CBDI) supérieur ou égal à 60% et une densité supérieure ou égale à 0,90 g/cm$^3$ ; et le polymère d'éthylène ayant une valeur $g'_{vis}$ supérieure d'au moins 0,01 unité par rapport à la valeur $g'_{vis}$ de l'agent modifiant de type PEHD.

2. Composition selon la revendication 1, l'agent modifiant comprenant 5% en poids ou moins de matière insoluble dans le xylène.

3. Composition selon la revendication 1 ou 2, le mélange étant formé en un film et le film ayant un voile total inférieur ou égal à 20%, la valeur de résistance à la déchirure Elmendorf dans le sens machine étant supérieure à 300 g/25,4 µm (g/mil), la résistance au choc au mouton étant supérieure à 170 g/25,4 µm (g/mil), le module sécant à 1% (dans le sens machine) étant supérieur à 180 MPa (26.000 psi) et le coefficient de variation pour l'épaisseur du film étant inférieur à 7%.

4. Composition selon l'une quelconque des revendications précédentes, l'agent modifiant étant présent en une quantité de 0,5% en poids jusqu'à 8% en poids, sur la base du poids du mélange.

5. Composition selon l'une quelconque des revendications précédentes, le polyéthylène comprenant un copolymère d'éthylène et une ou plusieurs alpha-oléfine(s) en $C_{3-20}$ et ayant une valeur $M_w$ de 20.000 jusqu'à 1.000.000 g/mole.

6. Composition selon l'une quelconque des revendications précédentes, le polyéthylène ayant une densité de 0,91 jusqu'à 0,96 g/cm$^3$.

7. Composition selon l'une quelconque des revendications précédentes, l'agent modifiant étant présent en une quantité de 0,1% en poids jusqu'à 5% en poids (sur la base du poids du mélange) ; et le polyéthylène ayant un indice de largeur de distribution de composition supérieur ou égal à 60% et une densité supérieure ou égale à 0,90 g/cm$^3$.

8. Composition selon l'une quelconque des revendications précédentes, le mélange étant formé en un film et le film ayant un voile total inférieur ou égal à 20%, un COV (coefficient de variation) d'épaisseur inférieur à 7% et un module sécant en flexion à 1% dans le sens machine supérieur ou égal à 170 MPa (25.000 psi).

9. Film de polyéthylène comprenant la composition selon l'une quelconque des revendications 1-8, ledit film ayant une variation d'épaisseur qui est au moins 10% plus basse que celle d'un film de la même épaisseur et de la même composition, sans agent modifiant, préparé dans les mêmes conditions et ayant une résistance au choc au mouton qui se situe dans les 20% de celle d'un film de la même épaisseur et de la même composition, sans agent modifiant, préparé dans les mêmes conditions.

10. Film de polyéthylène comprenant la composition selon l'une quelconque des revendications 1-8, ledit film ayant une variation d'épaisseur qui est au moins 10% plus basse que celle d'un film de la même épaisseur et de la même composition, sans agent modifiant, préparé dans les mêmes conditions et ayant une résistance à la déchirure dans le sens machine qui se situe dans les 20% de celle d'un film de la même épaisseur et de la même composition, sans agent modifiant, préparé dans les mêmes conditions.

11. Film de polyéthylène comprenant la composition selon l'une quelconque des revendications 1-8, ledit film ayant un voile qui est au moins 10% plus bas que celui d'un film de la même épaisseur et de la même composition, sans agent modifiant, préparé dans les mêmes conditions et ayant une résistance au choc au mouton qui se situe dans les 20% de celle d'un film de la même épaisseur et de la même composition, sans agent modifiant, préparé dans les mêmes conditions.

**12.** Film de polyéthylène comprenant la composition selon l'une quelconque des revendications 1-8, ledit film ayant un voile qui est au moins 10% plus bas que celui d'un film de la même épaisseur et de la même composition, sans agent modifiant, préparé dans les mêmes conditions et ayant une résistance à la déchirure dans le sens machine qui se situe dans les 20% de celle d'un film de la même épaisseur et de la même composition, sans agent modifiant, préparé dans les mêmes conditions.

**13.** Film de polyéthylène comprenant la composition selon l'une quelconque des revendications 1-8, ledit film ayant un voile inférieur ou égal à 20%.

**14.** Film de polyéthylène comprenant la composition selon l'une quelconque des revendications 1-8, le film ayant un voile qui est au moins 15% inférieur au voile mesuré sur un film de la même épaisseur et de la même composition, sans agent modifiant, préparé dans les mêmes conditions.

**15.** Film de polyéthylène comprenant la composition selon l'une quelconque des revendications 1-8, le film ayant une variation d'épaisseur qui est au moins 10% inférieure à la variation d'épaisseur mesurée sur un film de la même épaisseur et de la même composition, sans agent modifiant, préparé dans les mêmes conditions.

Figure 1

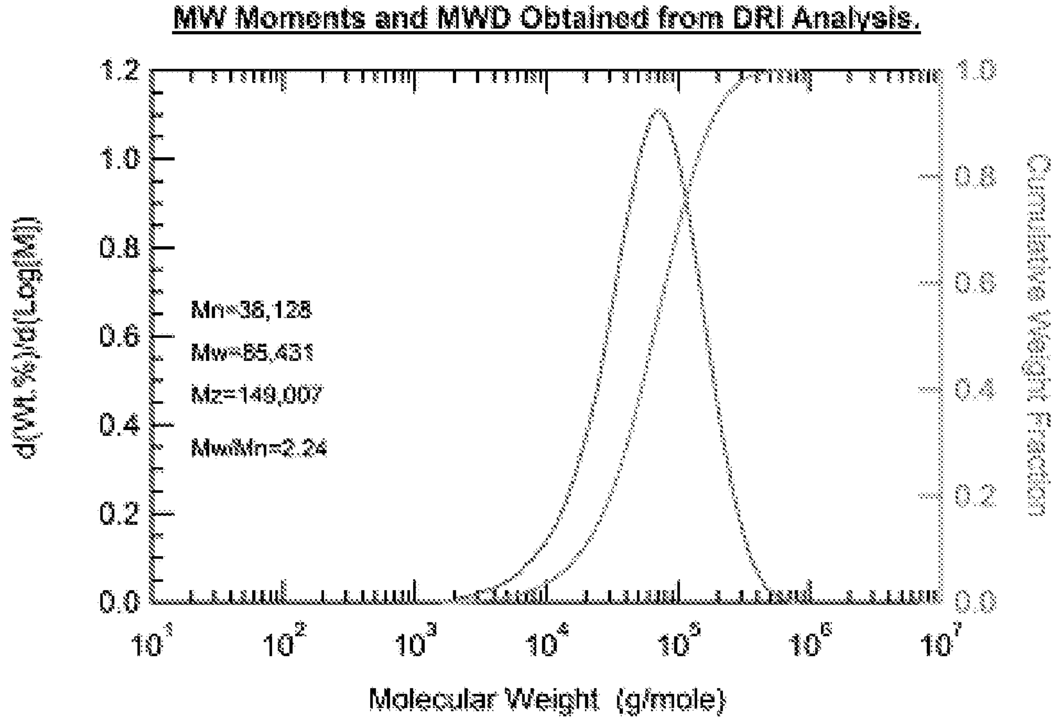


Figure 2

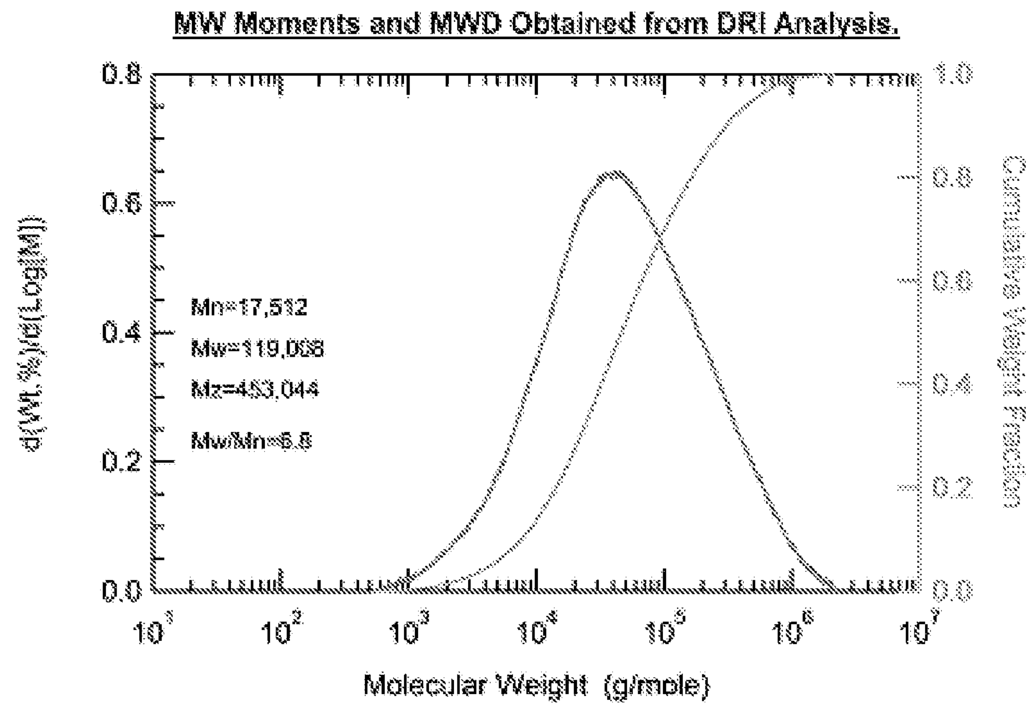

Figure 3

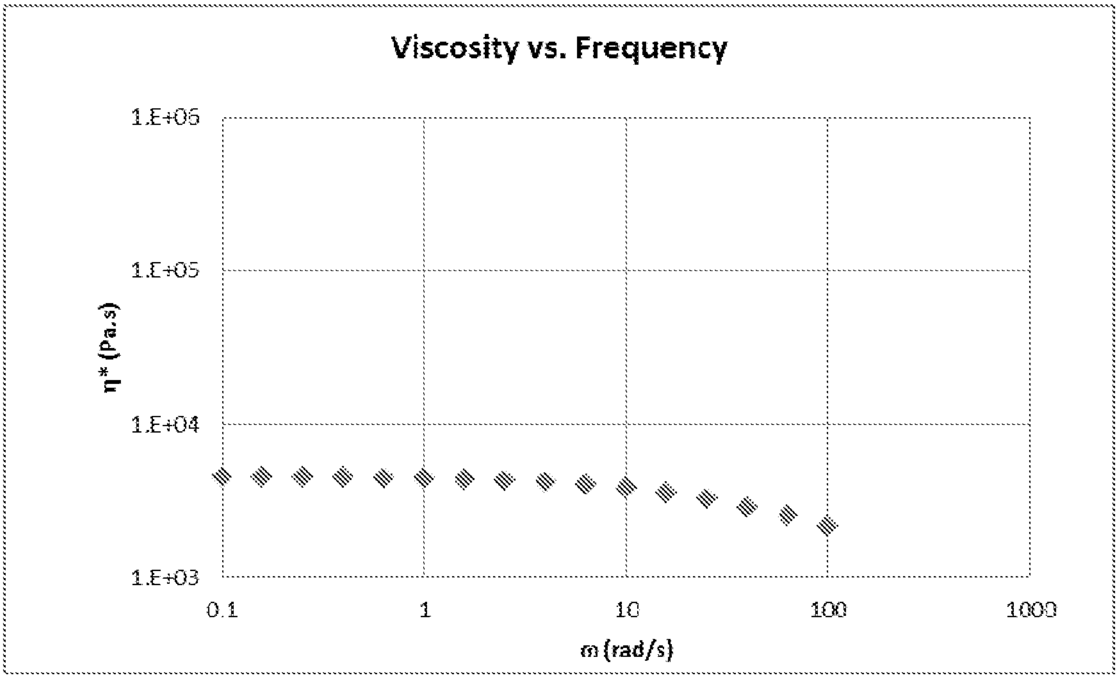


Figure 4

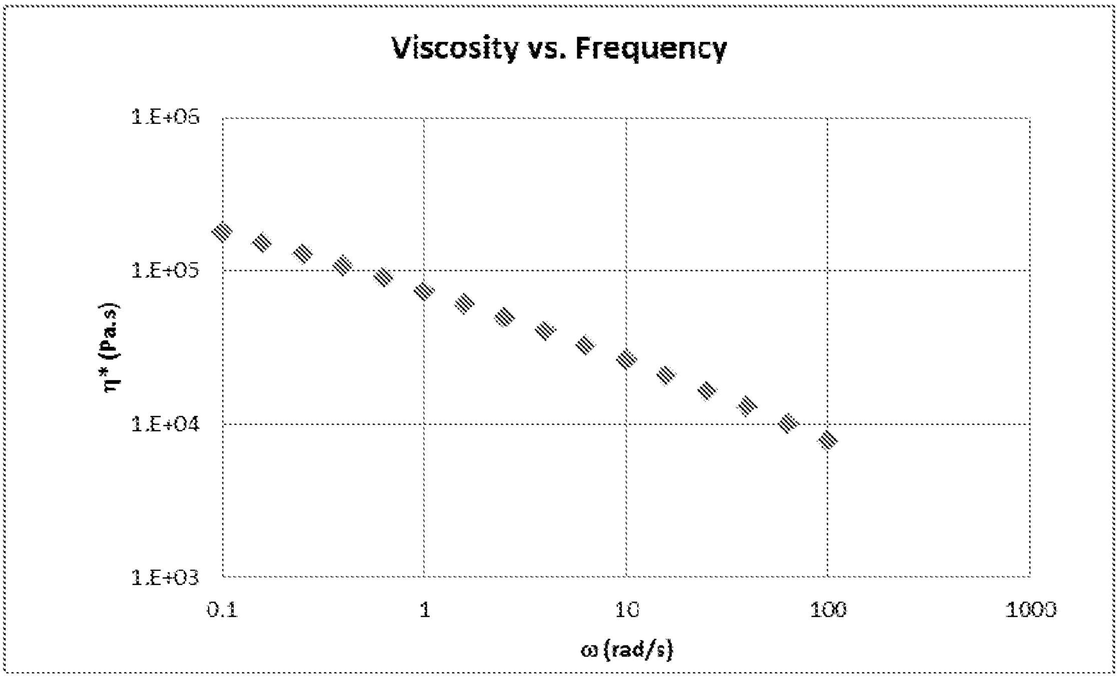

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 20070260016 A
- US 6300451 B
- US 6870010 B
- US 4438238 A
- US 4461873 A
- EP 0423962 A
- US 5082902 A
- US 5306775 A
- US 5382631 A
- US 7396878 B
- US 7943700 B
- US 8168724 B
- US 7439306 B
- US 7951873 B
- WO 2012106025 A
- US 5670595 A
- US 6509431 B
- US 7687580 B
- US 6355757 B
- US 6391998 B
- US 6417281 B
- US 6114457 A
- US 6734265 B
- US 6147180 A
- US 20110118420 A
- WO 9303093 A
- US 5008204 A
- US 20060173123 A
- US 6342566 B
- US 6384142 B
- US 5741563 A
- WO 03040201 A
- WO 9719991 PCT
- US 6476171 B
- US 6255426 B
- EP 1716190 A
- US 7491776 B
- US 5272236 A
- US 5278272 A
- US 3645992 A
- US 4937299 A
- US 4701432 A
- US 4937301 A
- US 4935397 A
- US 5055438 A
- EP 129368 A
- EP 260999 A
- WO 9007526 A
- US 6403692 B
- WO 2004005601 A1
- US 60617594 B
- US 6578413 B
- US 6691569 B


### Non-patent literature cited in the description


- **PATIL et al.** Rheology of Polyethylenes with Novel Branching Topology Synthesized by Chain Walking Catalyst. *Macromolecules,* 2005, vol. 38, 10571-10579
- **YE et al.** Chain-Topology-Controlled Hyperbranched Polyethylene as Effective Polymer Processing Aid (PPA) For Extrusion of a Metallocene Linear-Low-Density Polyethylene (mLLDPE). *J. Rheol.,* 2008, vol. 52, 243-260
- **GUZMAN et al.** *AIChE Journal,* May 2010, vol. 56 (5), 1325-1333
- **WILD et al.** *J. Poly. Sci., Poly. Phys. Ed.,* 1982, vol. 20, 441
- Inductively Coupled Plasma-Optical Emission Spectroscopy. **J. W. OLESIK.** Encyclopedia of Materials Characterization. Butterworth-Heinemann, 1992, 633-644
- **J. MEISSNER.** *Rheology Acta.,* 1969, vol. 8, 78
- ZIEGLER CATALYSTS. Springer-Verlag, 1995
- **RESCONI et al.** I, II METALLOCENE-BASED POLYOLEFINS. Wiley & Sons, 2000
- PLASTICS EXTRUSION TECHNOLOGY. Hanser Publishers, 1988, 26-37
- PLASTICS PROCESSING. Radian Corporation, Noyes Data Corp, 1986
- CONCISE ENCYCLOPEDIA OF POLYMER SCIENCE AND ENGINEERING. John Wiley & Sons, 1990
- **C.W. MACOSCO.** RHEOLOGY: PRINCIPLES, MEASUREMENTS, AND APPLICATIONS. Wiley-VCH, 1994

- Strain hardening of various polyolefins in uniaxial elongational flow. J. Rheol. The Society of Rheology, Inc, 2003, vol. 47, 619-630
- Measuring the transient extensional rheology of polyethylene melts using the SER universal testing platform. J. Rheol. The Society of Rheology, Inc, 2005, vol. 49, 585-606
- Polymer Handbook. John Wiley and Sons, 1999
- **M.B. HUGLIN.** LIGHT SCATTERING FROM POLYMER SOLUTIONS. Academic Press, 1971
- **T. SUN ; P. BRANT ; R. R. CHANCE ; W. W. GRAESSLEY.** *Macromolecules,* 2001, vol. 34 (19), 6812-6820